# EUROPÄISCHE PATENTSCHRIFT

(11) **EP 3 915 426 B1**
(45) Veröffentlichungstag und Bekanntmachung des Hinweises auf die Patenterteilung: **26.02.2025**
(21) Anmeldenummer: 21186040.8
(22) Anmeldetag: 28.02.2018
(51) Int. Cl.: A43C 11/16, A43C 7/00, A45C 13/10, F16B 21/02

(54) **VERSCHLUSSVORRICHTUNG MIT EINEM WICKELELEMENT**
LOCKING DEVICE WITH A COIL ELEMENT
DISPOSITIF DE VERROUILLAGE DOTÉ D'UN ÉLÉMENT ENROULEUR

(30) Priorität: 14.11.2017 DE 102017220305; 23.01.2018 DE 102018201021
(43) Veröffentlichungstag der Anmeldung: 01.12.2021
(62) Teilanmeldung aus: 18710797.4
(73) Patentinhaber: Fidlock GmbH, 30659 Hannover (DE)
(72) Erfinder: FIEDLER, Joachim, 30175 Hannover (DE)
(74) Vertreter: Maikowski & Ninnemann Patentanwälte Partnerschaft mbB

(56) Entgegenhaltungen:
- CN-A- 103 899 611
- US-A1- 2005 098 673
- US-A1- 2010 308 605
- US-A1- 2015 076 272

## Beschreibung

Die Erfindung betrifft eine Verschlussvorrichtung.

Eine derartige Verschlussvorrichtung umfasst ein erstes Verschlussteil und ein zweites Verschlussteil, die entlang einer Schließrichtung aneinander angesetzt werden können, in einer Schließstellung aneinander gehalten sind und zum Öffnen der Verschlussvorrichtung voneinander gelöst werden können.

Eine derartige Verschlussvorrichtung dient generell zum Verbinden zweier Teile miteinander. Beispielsweise kann eine solche Verschlussvorrichtung einen Verschluss für einen Behälter, zum Beispiel eine Tasche oder einen Rucksack, bereitstellen. Eine solche Verschlussvorrichtung kann beispielsweise aber auch als Verschluss für einen Schuh, z.B. einen Sportschuh, dienen. Ganz generell kann die Verschlussvorrichtung zum belastbaren Verbinden zweier beliebiger Baugruppen miteinander dienen. Wünschenswert kann hierbei sein, dass eine solche Verschlussvorrichtung nicht nur zum lösbaren Verbinden zweier Teile miteinander verwendet werden kann, sondern auch ein Spannen ermöglicht. Beispielsweise bei einem Verschluss für einen Rucksack oder bei einem Verschluss für einen Schuh kann wünschenswert sein, dass Teile zum einen aneinander angesetzt, zum anderen aber auch zueinander gespannt werden können.

Eine Spanneinrichtung mit einem auf ein Wickelelement aufwickelbaren Zugelement ist beispielsweise in der WO 2015/006616 A1 beschrieben.

Die US 2005/0098673 A1 beschreibt eine Wickelvorrichtung, bei der ein Wickelelement über ein Betätigungselement drehbar ist. Das Betätigungselement kann verdreht werden, um das Wickelelement zum Aufrollen eines Seils zu verdrehen. Das Betätigungselement kann linear verstellt werden, um das Wickelelement freizugeben und dadurch ein Abrollen des Seils zu ermöglichen.

Eine andere Wickelvorrichtung ist aus der US 2015/0076272 A1 bekannt.

Die US 2010/308605 A1 beschreibt eine Verschlussvorrichtung, bei der Verschlussteile aneinander angesetzt und in einer Schließstellung lösbar miteinander verbunden sind. Magnetische Mittel unterstützen hierbei das Ansetzen der Verschlussteile aneinander.

Aufgabe der vorliegenden Erfindung ist es, eine Verschlussvorrichtung zur Verfügung zu stellen, die einerseits ein lösbares Verbinden von Baugruppen miteinander, andererseits aber auch ein Spannen der Baugruppen zueinander ermöglicht.

Diese Aufgabe wird durch einen Gegenstand mit den Merkmalen des Anspruchs 1 gelöst.

Demnach weist das zweite Verschlussteil ein Betätigungselement mit einer ersten Eingriffseinrichtung und ein an dem Betätigungselement angeordnetes, zum Aufwickeln eines Zugelements in eine Wickelrichtung verdrehbares Wickelelement mit einer zweiten Eingriffseinrichtung auf. Die erste Eingriffseinrichtung und die zweite Eingriffseinrichtung stehen in einer Lösestellung nicht miteinander in Eingriff, sodass das Wickelelement relativ zu dem Betätigungselement verdrehbar ist. Die erste Eingriffseinrichtung und die zweite Eingriffseinrichtung können miteinander in Eingriff gebracht werden, sodass in einer Eingriffsstellung das Wickelelement über das Betätigungselement verdrehbar ist. Das erste Verschlussteil weist zudem eine erste Verzahnungseinrichtung und das zweite Verschlussteil eine zweite Verzahnungseinrichtung auf. Die erste Verzahnungseinrichtung und die zweite Verzahnungseinrichtung stehen in der Schließstellung der Verschlussvorrichtung miteinander in Eingriff derart, dass das erste Verschlussteil und das zweite Verschlussteil entlang der Wickelrichtung formschlüssig zueinander gehalten sind. Mit der vorgeschlagenen Verschlussvorrichtung werden ein Verschluss zum lösbaren Verbinden zweier Teile miteinander und eine Spanneinrichtung miteinander kombiniert. Einerseits weist die Verschlussvorrichtung zwei Verschlussteile auf, die entlang einer Schließrichtung aneinander angesetzt werden können und in einer Schließstellung aneinandergehalten sind, sodass den Verschlussteilen zugeordnete Baugruppen über die Verschlussteile und deren Halt aneinander miteinander verbunden sind und durch Trennen der Verschlussteile voneinander die Baugruppen auch wieder voneinander gelöst werden können. Andererseits weist das zweite Verschlussteil ein Wickelelement auf, an dem ein Zugelement angeordnet werden kann. Das Wickelelement kann beispielsweise die Form einer zylindrischen Rolle aufweisen und eine Wickelrille tragen, in der das Zugelement aufgenommen werden kann. Durch Verdrehen des Wickelelements kann somit das Zugelement aufgewickelt und damit gespannt werden.

Während das erste Verschlussteil an einer ersten Baugruppe angeordnet sein kann, kann das zweite Verschlussteil über das Zugelement mit einer zweiten Baugruppe verbunden sein, wobei durch Aufwickeln des Zugelements auf das Wickelelement die erste Baugruppe und die zweite Baugruppe zueinander gespannt werden können.

Bei dem Zugelement kann es sich beispielsweise um ein biegeschlaffes Element handeln, dass (ausschließlich) zum Übertragen von Zugkräften geeignet ist. Bei dem Zugelement kann es sich beispielsweise um ein Seil, ein Gurt, ein Band, einen Riemen, eine Kette oder ein (elektrisch leitfähiges) Kabel handeln.

Das Zugelement kann beispielsweise mit zwei Enden an dem Wickelelement befestigt werden, sodass durch Verdrehen des Wickelelements das Zugelement mit seinen zwei Enden auf das Wickelelement aufgewickelt werden kann. Denkbar und möglich ist aber auch, dass lediglich ein Ende des Zugelements an dem Wickelelement befestigt ist, um durch Verdrehen des Wickelelements lediglich dieses eine Ende aufzuwickeln. Denkbar und möglich ist zudem auch, dass ein Binnenabschnitt des Zugelements an dem Wickelelement angeordnet ist, um durch Verdrehen des Wickelelements das Zugelement aufzuwickeln. Und denkbar ist, dass mehrere unterschiedliche Zugelemente an dem Wickelelement angeordnet sind und über das Wickelelement aufgewickelt werden können.

Bei der Verschlussvorrichtung sind das Betätigungselement und das Wickelelement über Eingriffseinrichtungen miteinander (lösbar) wirkverbunden. Dies ermöglicht insbesondere dann, wenn die Verschlussvorrichtung sich in der Schließstellung befindet, das Wickelelement durch Betätigen des Betätigungselements zu verdrehen, sodass ein an dem Wickelelement angeordnetes Zugelement auf das Wickelelement aufgewickelt werden kann. In der Schließstellung stehen die erste Eingriffseinrichtung des Betätigungselements und die zweite Eingriffseinrichtung des Wickelelements hierzu miteinander in Eingriff, sodass eine Betätigungskraft von dem Betätigungselement auf das Wickelelement übertragen und das Wickelelement somit zusammen mit dem Betätigungselement verdreht wird.

Die Eingriffseinrichtungen können jedoch aus ihrem Eingriff gelöst werden, um eine Relativbewegung zwischen dem Betätigungselement und dem Wickelelement zu ermöglichen. Dies ermöglicht zum Beispiel dann, wenn die Verschlussvorrichtung geöffnet ist, ein unabhängiges Verdrehen des Wickelelements relativ zu dem Betätigungselement, sodass bei geöffneter Verschlussvorrichtung das Zugelement zum Beispiel in einfacher Weise von dem Wickelelement abgespult werden kann, ohne dass dabei das Betätigungselement mit verdreht werden muss. Dies kann die Betätigung der Verschlussvorrichtung erheblich vereinfachen.

In der Schließstellung der Verschlussvorrichtung sind die erste Eingriffseinrichtung und die zweite Eingriffseinrichtung vorzugsweise in der Eingriffsstellung und werden in dieser Eingriffsstellung gehalten. In der Schließstellung der Verschlussvorrichtung sind das Betätigungselement und das Wickelelement somit miteinander wirkverbunden, sodass ein Verdrehen des Betätigungselements zu einem Verdrehen des Wickelelements führt und somit eine Betätigungskraft von dem Betätigungselement in das Wickelelement eingeleitet wird.

Die Eingriffseinrichtungen können, in einer Ausgestaltung, so beschaffen sein, dass in der Eingriffsstellung eine starre, belastbare und bidirektionale Verbindung zwischen dem Betätigungselement und dem Wickelelement hergestellt wird. Das Betätigungselement und das Wickelelement sind somit in die Wickelrichtung und auch entgegen der Wickelrichtung nur gemeinsam verdrehbar.

In anderer Ausgestaltung kann der Eingriff zwischen der ersten Eingriffseinrichtung und der zweiten Eingriffseinrichtung aber auch so beschaffen sein, dass Betätigungskräfte bei einem Verstellen des Betätigungselements in die Wickelrichtung auf das Wickelelement übertragen werden, ein Verdrehen des Betätigungselements entgegen der Wickelrichtung aber nicht zu einem Verdrehen des Wickelelements führt, sondern das Betätigungselement entgegen der Wickelrichtung unabhängig von dem Wickelelement verdrehbar ist. Hierzu können eine der Eingriffseinrichtungen oder auch beide Eingriffseinrichtungen beispielsweise eine sägezahnförmige Gestalt aufweisen derart, dass bei einem Eingriff bei einem Verdrehen des Betätigungselements in die Wickelrichtung die Eingriffseinrichtungen zueinander sperren und somit das Wickelelement zusammen mit dem Betätigungselement verdreht wird, bei einem Verdrehen des Betätigungselements entgegen der Wickelrichtung die Eingriffseinrichtungen jedoch übereinander gleiten können und insbesondere keine (nennenswerte) Kraftübertragung über die Eingriffseinrichtungen erfolgt.

Die Eingriffseinrichtungen sind beispielsweise umlaufend um die Schließrichtung einerseits an dem Betätigungselement und andererseits an dem Wickelelement angebracht. Die Eingriffseinrichtungen sind hierbei an einander zugewandten Flächen des Betätigungselements und des Wickelelements ausgebildet.

In einer konkreten Ausgestaltung kann das Wickelelement beispielsweise eine die zweite Eingriffseinrichtung verwirklichende sägezahnförmige Verzahnung aufweisen, während die erste Eingriffseinrichtung des Betätigungselements durch eine Abfolge von aneinander angereihten Eingriffsöffnungen gebildet ist, mit denen die sägezahnförmige Verzahnung des Wickelelements in der Eingriffsstellung in Eingriff steht.

Zum Bewegen der Eingriffseinrichtungen zwischen der Lösestellung und der Eingriffsstellung können das Betätigungselement und das Wickelelement beispielsweise axial entlang der Schließrichtung zueinander verstellt werden. In der Lösestellung sind Flächen des Betätigungselements und des Wickelelements, an denen die Eingriffseinrichtungen ausgebildet sind, entlang der Schließrichtung axial voneinander entfernt, sodass die Eingriffseinrichtungen nicht miteinander in Eingriff stehen. In der Eingriffsstellung sind die Flächen hingegen einander angenähert, sodass ein Eingriff zwischen den Eingriffseinrichtungen besteht.

In einer Ausgestaltung sind das Betätigungselement und das Wickelelement zueinander federvorgespannt, zum Beispiel in Richtung der Lösestellung. Hierzu kann zwischen dem Betätigungselement und dem Wickelelement beispielsweise ein Federelement, zum Beispiel in Form einer Spiralfeder oder auch in Form einer an dem Betätigungselement oder dem Wickelelement angespritzten Feder, wirken, das eine federmechanische Vorspannung zwischen dem Betätigungselement und dem Wickelelement in Richtung der Lösestellung bewirkt. Wirken keine anderen Kräfte zwischen dem Betätigungselement und dem Wickelelement, insbesondere wenn sich die Verschlussvorrichtung in ihrer geöffneten Stellung befindet, so sind das Betätigungselement und das Trägerelement somit nicht miteinander in Eingriff, sodass das Wickelelement unabhängig von dem Betätigungselement beispielsweise für ein Abwickeln des Zugelements verdreht werden kann.

Zusätzlich zu den Eingriffseinrichtungen, die dazu dienen, eine (lösbare) Wirkverbindung zwischen dem Betätigungselement und dem Wickelelement herzustellen, weisen das erste Verschlussteil und das zweite Verschlussteil jeweils eine Verzahnungseinrichtung auf, die in der Schließstellung der Verschlussvorrichtung einen formschlüssigen Halt entlang der Wickelrichtung der Verschlussteile zueinander herstellen.

Unter einem formschlüssigen Halt ist hierbei zu verstehen, dass zumindest gewisse entlang der Wickelrichtung zwischen den Verschlussteilen wirkende Kräfte formschlüssig abgestützt und abgeleitet werden können, ohne dass hierdurch die Verschlussteile entlang der Wickelrichtung zueinander verstellt werden. Ein solcher formschlüssiger Halt kann in die Wickelrichtung und zudem entgegen der Wickelrichtung bestehen. Denkbar und möglich ist aber auch, dass Kräfte nur in eine Richtung, also in die Wickelrichtung oder entgegen der Wickelrichtung, abgestützt werden.

Der formschlüssige Halt kann hierbei so beschaffen sein, dass eine Bewegung des zweiten Verschlussteils in der Schließstellung relativ zu dem ersten Verschlussteil entgegen der Wickelrichtung und/oder in die Wickelrichtung gesperrt ist, der formschlüssige Halt also nicht ohne weiteres, zumindest nicht ohne Abnehmen des zweiten Verschlussteils vom ersten Verschlussteil überwunden werden kann. Der formschlüssige Halt kann alternativ aber auch so beschaffen sein, dass bei Überschreiten eines gewissen Grenzdrehmoments, das von der Geometrie der Verzahnungseinrichtungen abhängt, der formschlüssige Halt überwunden werden kann, sodass das zweite Verschlussteil bei einer Krafteinleitung, mit der das Grenzdrehmoment überschritten wird, zu dem ersten Verschlussteil in die Wickelrichtung und/oder entgegen der Wickelrichtung verdreht werden kann.

Die zweite Verzahnungseinrichtung (des zweiten Verschlussteils) kann hierbei an dem Betätigungselement oder dem Wickelelement angeordnet sein. Ein formschlüssiger Halt in der Schließstellung kann somit zwischen dem Betätigungselement und dem ersten Verschlussteil oder zwischen dem Wickelelement und dem ersten Verschlussteil hergestellt werden.

Mittels der Verzahnungseinrichtungen kann insbesondere eine Art Freilauf bereitgestellt werden, der ein Verdrehen des zweiten Verschlussteils zu dem ersten Verschlussteil in die Wickelrichtung ermöglicht, wenn die Verschlussteile aneinander angesetzt sind und sich somit in der Schließstellung befinden, eine Bewegung entgegen der Wickelrichtung jedoch sperrt. Bei Verdrehen des Wickelelements zu dem ersten Verschlussteil gleitet die zweite Verzahnungseinrichtung des zweiten Verschlussteils über die erste Verzahnungseinrichtung des ersten Verschlussteils, sodass ein ratschendes Bewegen des zweiten Verschlussteils zu dem ersten Verschlussteil in die Wickelrichtung möglich ist. Bei einer Belastung entgegen der Wickelrichtung gelangen Verzahnungselemente der Verzahnungseinrichtungen jedoch derart miteinander in Eingriff, dass eine Bewegung gesperrt ist und das zweite Verschlussteil und damit auch das Wickelelement in seiner gerade eingenommenen Stellung gehalten werden.

Die Verzahnungseinrichtungen können beispielsweise in axialer Richtung miteinander in Eingriff stehen. Bei einem Verdrehen des zweiten Verschlussteils in die Wickelrichtung zu dem ersten Verschlussteil gleiten die Verzahnungseinrichtungen übereinander, beispielsweise indem sägezahnförmige Verzahnungselemente aufeinander aufgleiten. Sind das erste Verschlussteil und das zweite Verschlussteil verdrehbar zueinander gelagert und axial aneinander geführt, kann dies einhergehen mit einer (geringfügigen) axialen Bewegung des zweiten Verschlussteils zu dem ersten Verschlussteil.

Alternativ kann vorgesehen sein, dass zumindest eine der Verzahnungseinrichtungen zumindest ein Verzahnungselement aufweist, das bei Verdrehen des zweiten Verschlussteils in die Wickelrichtung zum Beispiel quer zur Wickelrichtung beiseite gedrängt werden kann. In diesem Fall kommt es somit nicht zu einer axialen Bewegung zwischen den Verschlussteilen, sondern die Verzahnungselemente einer der Verzahnungseinrichtungen werden beiseite gedrängt, wenn das zweite Verschlussteil in die Wickelrichtung relativ zu dem ersten Verschlussteil verdreht wird. Dies kann insbesondere sinnvoll sein, wenn das erste Verschlussteil und das zweite Verschlussteil in der Schließstellung mechanisch miteinander verrastet sind und nicht axial gegeneinander bewegt werden können.

Grundsätzlich können alle Arten von technisch bekannten Freiläufen zum Einsatz kommen.

In einer Ausgestaltung weist das erste Verschlussteil einen Zylinderabschnitt auf, der in der Schließstellung in eine Öffnung des Wickelelements zum drehbaren Lagern des Wickelelements an dem ersten Verschlussteil eingreift. Um den Flächenabschnitt herum kann die erste Verzahnungseinrichtung des ersten Verschlussteils umfänglich erstreckt sein. Über den Zylinderabschnitt wird in diesem Fall eine drehbare Lagerung des zweiten Verschlussteils, insbesondere des Wickelelements des zweiten Verschlussteils, an dem ersten Verschlussteil bewirkt, sodass das zweite Verschlussteil durch Betätigung des Betätigungselements in einfacher Weise zum Beispiel zum Aufwickeln des Zugelements auf das Wickelelement verdreht werden kann, bei Übereinandergleiten der Verzahnungseinrichtungen des ersten Verschlussteils und des zweiten Verschlussteils.

Eine Verschlussvorrichtung der hier beschriebenen Art kann als rein mechanische Verschlussvorrichtung ausgebildet sein, bei der die Verschlussteile aneinander angesetzt werden und in der Schließstellung mechanisch aneinandergehalten sind. Über einen solchen mechanischen Halt können hierbei Scherkräfte in einer Ebene quer zur Schließrichtung aufgenommen werden und zusätzlich gegebenenfalls auch, bei einer mechanischen Verrastung zwischen den Verschlussteilen, Kräfte entgegen der Schließrichtung.

Die Verschlussvorrichtung ist magnetisch ausgebildet. Hierzu weisen das erste Verschlussteil und das zweite Verschlussteil jeweils zumindest ein Magnetelement auf, die sich bei Ansetzen der Verschlussteile aneinander zum Schließen der Verschlussvorrichtung magnetisch anziehend gegenüberstehen und das Schließen der Verschlussvorrichtung somit magnetisch unterstützen.

Ein Magnetelement kann hierbei durch einen Permanentmagneten oder auch durch einen magnetischen Anker, zum Beispiel aus einem ferromagnetischen Material, gebildet sein. Beispielsweise kann eines der Verschlussteile einen Permanentmagneten aufweisen, das magnetisch anziehend mit einem magnetischen Anker des anderen Verschlussteils zusammenwirkt. Denkbar ist aber auch, dass beide Verschlussteile jeweils einen Permanentmagneten oder auch eine Anordnung von mehreren Permanentmagneten aufweisen, die sich bei Ansetzen der Verschlussteile aneinander mit ungleichnamigen Polen gegenüberstehen und ein Ansetzen somit durch magnetische Anziehung unterstützen.

Über Magnetelemente, die zwischen dem ersten Verschlussteil und dem zweiten Verschlussteil magnetisch anziehend wirken und somit das Ansetzen der Verschlussteile aneinander magnetisch unterstützen, können insbesondere die Verzahnungseinrichtungen der Verschlussteile miteinander in Eingriff gezogen werden, sodass in der Schließstellung ein Eingriff zwischen den Verzahnungseinrichtungen besteht. Über die Magnetelemente kann zudem auch bewirkt werden, dass die Eingriffseinrichtungen des Betätigungselements und des Wickelelements in der Schließstellung miteinander in Eingriff sind.

Beispielsweise kann an dem Betätigungselement ein Magnetelement angeordnet sein, das mit einem zugeordneten Magnetelement an dem ersten Verschlussteil bei Schließen der Verschlussvorrichtung zusammenwirkt. Aufgrund der magnetischen Anziehungskraft kann in der Schließstellung auch der Eingriff zwischen den Eingriffseinrichtungen des Betätigungselements und des Wickelelements hergestellt sein, indem aufgrund der Magnetwirkung auf das Betätigungselement das Betätigungselement hin zu dem Wickelelement gezogen wird.

Besteht eine Federvorspannung zwischen dem Betätigungselement und dem Wickelelement in Richtung der Lösestellung der Eingriffseinrichtungen, so übersteigt die magnetische Anziehungskraft in der Schließstellung vorzugsweise die vorspannende Federkraft, sodass aufgrund der magnetischen Anziehungskraft der Eingriff zwischen den Eingriffseinrichtungen des Betätigungselements und des Wickelelements hergestellt werden kann.

Das erste Verschlussteil und das zweite Verschlussteil sind in der Schließstellung zum Halten der Verschlussteile entgegen der Schließrichtung aneinander mechanisch miteinander verrastet. Hierzu kann eines der Verschlussteile beispielsweise eine Rasteinrichtung mit zumindest einem verstellbaren Rastelement aufweisen, das in einer verrasteten Stellung in einen Rasteingriff des anderen Verschlussteils eingreift und dadurch die Verschlussteile entgegen der Schließrichtung aneinander hält. Über die Rasteinrichtung wird somit eine mechanische Verrastung zwischen den Verschlussteilen hergestellt, wenn die Verschlussteile aneinander angesetzt sind. Über die Rasteinrichtung werden die Verschlussteile entgegen einer der Schließrichtung entgegen gerichteten Belastung aneinander gehalten, sodass ein Abnehmen der Verschlussteile voneinander nicht ohne Lösen der Verrastung möglich ist.

Vorzugsweise gelangt die Rasteinrichtung bei Ansetzen der Verschlussteile aneinander selbsttätig in die verrastete Stellung. Bei Ansetzen der Verschlussteile aneinander verrasten die Verschlussteile somit selbsttätig miteinander, sodass der Halt der Verschlussteile aneinander in der Schließstellung gesichert ist. Das zweite Verschlussteil kann hierbei gegebenenfalls trotz der Verrastung in die Wickelrichtung zu dem ersten Verschlussteil drehbar sein, sodass das Zugelement bei aneinander angesetzten Verschlussteilen auf das Wickelelement aufgewickelt werden kann.

Die Rasteinrichtung kann ein oder mehrere Rastelemente aufweisen. Diese sind beispielsweise in Richtung ihrer verrasteten Stellung federvorgespannt, sodass die Rastelemente bei Ansetzen der Verschlussteile aneinander vorzugsweise selbsttätig in Eingriff mit dem zugeordneten Rasteingriff des anderen Verschlussteils gelangen.

In einer Ausgestaltung weist die Rasteinrichtung ein Eingriffselement auf, das in der Schließstellung in das andere Verschlussteil eingreift und an dem das zumindest eine Rastelement angeordnet ist. Ist die Rasteinrichtung beispielsweise an dem zweiten Verschlussteil angeordnet, so greift das Eingriffselement in der Schließstellung in eine zugeordnete Öffnung zum Beispiel in einem das Wickelelement lagernden Zylinderabschnitt des ersten Verschlussteils ein. An dem Eingriffselement sind ein oder mehrere Rastelemente angeordnet, sodass über das Eingriffselement die Verrastung zwischen den Verschlussteilen in der Schließstellung hergestellt wird.

In einer Ausgestaltung ist, wenn die Rasteinrichtung an dem zweiten Verschlussteil ausgebildet ist, das Eingriffselement axial entlang der Schließrichtung zu dem Betätigungselement verstellbar. Das Betätigungselement kann somit um einen gewissen Weg zu dem Eingriffselement axial verstellt werden, was insbesondere ermöglicht, dass das zweite Verschlussteil bei Verdrehen zu dem ersten Verschlussteil und bei Übereinandergleiten der Verzahnungseinrichtungen eine ausgleichende axiale Relativbewegung zu dem ersten Verschlussteil ausführen kann, bei bestehender Verrastung zwischen dem zweiten Verschlussteil und dem ersten Verschlussteil.

Hierbei ist das Eingriffselement vorzugsweise gegenüber dem Betätigungselement federvorgespannt, zum Beispiel über eine Druckfeder, die das Betätigungselement und damit auch das Wickelelement in Richtung des ersten Verschlussteils drückt, wenn sich die Verschlussvorrichtung in der Schließstellung befindet.

Um die Verrastung zwischen den Verschlussteilen zu lösen und die Verschlussteile zum Öffnen der Verschlussvorrichtung voneinander trennen zu können, weist die Rasteinrichtung vorzugsweise ein Bedienelement auf, das betätigt werden kann, um das zumindest eine Rastelement außer Eingriff mit dem Rasteingriff zu bringen. Auf das Bedienelement, das um Beispiel an dem Eingriffselement verstellbar angeordnet ist, kann ein Nutzer beispielsweise drücken, um auf diese Weise die an dem Eingriffselement angeordneten Rastelemente zu bewegen oder zumindest freizugeben, sodass die Verrastung der Rasteinrichtung gelöst werden kann.

Das Bedienelement ist beispielsweise axial entlang der Schließrichtung an dem Eingriffselement geführt. Das Eingriffselement kann beispielsweise als Buchse ausgeführt sein, innerhalb derer das Bedienelement axial entlang der Schließrichtung verschiebbar aufgenommen ist.

In einer Ausgestaltung kann zwischen dem Betätigungselement und dem Wickelelement auch ein Getriebe, zum Beispiel ein Planetengetriebe, vorgesehen sein, sodass eine Krafteinleitung von dem Betätigungselement in das Wickelelement über ein Getriebe und somit in untersetzter oder in übersetzter Weise erfolgt.

Die Betätigung des Betätigungselements kann händisch durch Verdrehen des Betätigungselements erfolgen. Denkbar und möglich sind aber auch Ausgestaltungen, bei denen ein Elektromotor zum Antreiben des Betätigungselements vorgesehen ist. Ein solcher Elektromotor kann beispielsweise an einer mit dem ersten Verschlussteil verbundenen Baugruppe ortsfest angeordnet sein und kann beispielsweise über ein geeignetes Getriebeelement, zum Beispiel eine Antriebsschnecke, mit einer Verzahnung des Betätigungselements in Eingriff gelangen, wenn sich die Verschlussvorrichtung in ihrer Schließstellung befindet. Über den Elektromotor kann somit das Betätigungselement verdreht werden.

Denkbar und möglich ist alternativ, die Verzahnungseinrichtung des ersten Verschlussteils elektromotorisch anzutreiben, um durch Verdrehen der Verzahnungseinrichtung des ersten Verschlussteils das Wickelelement zu verdrehen.

Am ersten Verschlussteil und am zweiten Verschlussteil können, in einer Ausgestaltung, jeweils ein oder mehrere elektrische Kontaktelemente angeordnet sein, sodass bei Schließen der Verschlussvorrichtung ein elektrischer Kontakt zwischen den Verschlussteilen hergestellt wird.

In einer weiteren Ausgestaltung kann die Verschlussvorrichtung ein Windenausgangselement aufweisen, zum Beispiel in Form einer Öse, die an dem zweiten Verschlussteil angeordnet und als zu dem Wickelelement und dem Betätigungselement zusätzliches Bauteil ausgebildet sein kann. Das Windenausgangselement kann beispielsweise frei gegenüber dem Wickelelement und/oder dem Betätigungselement verdrehbar sein und führt das Zugelement mit Bezug auf das Wickelelement, sodass das Zugelement in definierter Weise in das Wickelelement einläuft. Dies verhindert ein unkontrolliertes Abwickeln des Zugelements vom Wickelelement und insbesondere ein Verknoten des Zugelements beim Abwickeln.

Die hier beschriebene Verschlussvorrichtung ermöglicht ein lösbares Verbinden von Verschlussteilen in Kombination mit einer Spannmöglichkeit für ein Zugelement. Dies ermöglicht zum Beispiel, bei getrennten Verschlussteilen das Zugelement auf Zug vorzuspannen, um sodann die Verschlussvorrichtung zu schließen und in der Schließstellung der Verschlussvorrichtung durch Verdrehen des Wickelelements das Zugelement aufzuwickeln und nachzuspannen. Beispielsweise bei einem Schuh kann auf diese Weise das Zugelement (nach Art eines Schnürsenkels) bei getrennter Verschlussvorrichtung händisch durch Zug am Zugelement vorgespannt und sodann, bei geschlossener Verschlussvorrichtung, nachgespannt werden.

Zudem ermöglicht das Trennen der Verschlussteile, dass das mit dem Wickelelement verbundene Zugelement um einen Gegenstand herum gelegt werden kann, um mittels der Verschlussvorrichtung eine Baugruppe an einer anderen festzulegen. So kann das Zugelement bei geöffneter Verschlussvorrichtung beispielsweise um einen Mast oder auch einen Rahmen, zum Beispiel einen Fahrradrahmen, herum gelegt werden, um die Verschlussvorrichtung sodann zu schließen und das Zugelement zu spannen, sodass auf diese Weise eine Baugruppe an dem Mast oder dem Rahmen festgelegt werden kann.

Eine Verschlussvorrichtung der hier beschriebenen Art kann in ganz unterschiedlicher Weise Verwendung finden. So kann eine Verschlussvorrichtung der hier beschriebenen Art bei Taschen oder anderen Behältnissen wie Rücksäcken, Kisten oder Containern, bei Schuhen (insbesondere Sportschuhen wie Wanderschuhen, Skistiefeln oder dergleichen), bei Helmen, insbesondere Sporthelmen, oder bei medizinischen Hilfsmitteln wie zum Beispiel medizinischen Stützschienen oder dergleichen zum Einsatz kommen.

Beispielsweise können über eine Verschlussvorrichtung der hier beschriebenen Art Gurte an Säcken oder Taschen gespannt werden (sogenannter Kompressionsgurte). Ein Gürtel oder ein Hüftgurt eines Rucksacks oder Schulranzens kann über eine solche Verschlussvorrichtung geschlossen und gespannt werden. Und eine solche Verschlussvorrichtung kann an einer Kabeltrommel zum Aufwickeln eines elektrischen Kabels, wie zum Beispiel eines Kopfhörer- oder Ladekabels, zum Einsatz kommen.

Bei einem Helm kann über eine Verschlussvorrichtung der hier beschriebenen Art ein Gurt gespannt werden, oder ein Gegenstand kann an dem Helm befestigt werden, zum Beispiel eine Schutzbrille (wie eine Skibrille) oder dergleichen.

Eine solche Verschlussvorrichtung kann auch zum Verstauen und Befestigen von Zubehör oder Taschen in oder an Fahrzeugen (Fahrräder, PKW, LKW, Schiffe, Flugzeuge etc.) dienen, zum Beispiel als Spannvorrichtung an einem Fahrradgepäckträger.

Konkret kann eine solche Verschlussvorrichtung beispielsweise an einer um einen Fahrradrahmen spannbaren Halterung zum Festlegen einer Baugruppe, zum Beispiel einer Trinkflasche oder eines Behälters an dem Fahrradrahmen, zum Einsatz kommen.

Zudem kann eine solche Verschlussvorrichtung zum Spannen von Planen und Tüchern jeder Art dienen, zum Beispiel zum Spannen von Zeltplanen oder auch zum Spannen eines Sonnenschutzes.

Auch militärische Anwendungen sind denkbar und möglich. So kann eine Verschlussvorrichtung zum Spannen und Verstauen von Waffen und Munition verwendet werden.

Eine Verschlussvorrichtung der beschriebenen Art kann auch bei einem Tourniquet-Abbindesystem zum Einsatz kommen zum Abbinden stark blutender Wunden bei einem Patienten.

Der der Erfindung zugrunde liegende Gedanke soll nachfolgend anhand der in den Figuren dargestellten Ausführungsbeispiele näher erläutert werden. Es zeigen:
- Fig. 1A, 1B: Ansichten eines ersten Ausführungsbeispiels einer Verschlussvorrichtung;
- Fig. 2A, 2B: Explosionsansichten der Verschlussvorrichtung;
- Fig. 3A: eine perspektivische Ansicht der Verschlussvorrichtung in einer Schließstellung;
- Fig. 3B: eine Seitenansicht der Anordnung gemäß Fig. 3A;
- Fig. 3C: eine Draufsicht auf die Verschlussvorrichtung;
- Fig. 3D: eine Schnittansicht entlang der Linie A-A gemäß Fig. 3C;
- Fig. 3E: eine Schnittansicht entlang der Linie B-B gemäß Fig. 3C;
- Fig. 3F: eine vergrößerte Ansicht eines Ausschnitts der Ansicht gemäß Fig. 3E;
- Fig. 4A: eine Ansicht der Verschlussvorrichtung in einer geöffneten Stellung;
- Fig. 4B: eine Seitenansicht der Anordnung gemäß Fig. 4A;
- Fig. 4C: eine Draufsicht auf die Verschlussvorrichtung;
- Fig. 4D: eine Schnittansicht entlang der Linie G-G gemäß Fig. 4C;
- Fig. 4E: eine Schnittansicht entlang der Linie I-I gemäß Fig. 4C;
- Fig. 4F: eine vergrößerte Ansicht eines Ausschnitts der Ansicht gemäß Fig. 4E;
- Fig. 5A: eine Draufsicht auf die Verschlussvorrichtung in der geöffneten Stellung;
- Fig. 5B: eine Schnittansicht entlang der Linie Q-Q gemäß Fig. 5A;
- Fig. 5C: eine vergrößerte Ansicht eines Ausschnitts der Ansicht gemäß Fig. 5B;
- Fig. 6A, 6B: Explosionsansichten eines weiteren Ausführungsbeispiels einer Verschlussvorrichtung;
- Fig. 7A: eine perspektivische Ansicht der Verschlussvorrichtung in einer Schließstellung;
- Fig. 7B: eine Seitenansicht der Anordnung gemäß Fig. 7A;
- Fig. 7C: eine Draufsicht auf die Verschlussvorrichtung;
- Fig. 7D: eine Schnittansicht entlang der Linie A-A gemäß Fig. 7C;
- Fig. 8A: eine perspektivische Ansicht der Verschlussvorrichtung beim Verdrehen eines Verschlussteils zu dem anderen;
- Fig. 8B: eine Seitenansicht der Anordnung gemäß Fig. 8A;
- Fig. 8C: eine Draufsicht auf die Verschlussvorrichtung;
- Fig. 8D: eine Schnittansicht entlang der Linie B-B gemäß Fig. 8C;
- Fig. 9A: eine perspektivische Ansicht der Verschlussvorrichtung beim Öffnen;
- Fig. 9B: eine Seitenansicht der Anordnung gemäß Fig. 9A;
- Fig. 9C: eine Draufsicht auf die Verschlussvorrichtung;
- Fig. 9D: eine Schnittansicht entlang der Linie C-C gemäß Fig. 9C;
- Fig. 10A: eine perspektivische Ansicht der Verschlussvorrichtung in einer geöffneten Stellung;
- Fig. 10B: eine Seitenansicht der Ansicht gemäß Fig. 10A;
- Fig. 10C: eine Draufsicht auf die Verschlussvorrichtung;
- Fig. 10D: eine Schnittansicht entlang der Linie D-D gemäß Fig. 10C;
- Fig. 11A: eine perspektivische Ansicht eines weiteren Ausführungsbeispiels einer Verschlussvorrichtung, in einer Schließstellung der Verschlussvorrichtung;
- Fig. 11B: eine Seitenansicht der Anordnung gemäß Fig. 11A;
- Fig. 11C: eine Draufsicht auf die Verschlussvorrichtung;
- Fig. 11D: eine Schnittansicht entlang der Linie A-A gemäß Fig. 11C;
- Fig. 11E: eine Schnittansicht eines modifizierten Ausführungsbeispiels entlang der Linie A-A gemäß Fig. 11C;
- Fig. 12A: eine schematische Ansicht eines Ausführungsbeispiels von Verzahnungseinrichtungen;
- Fig. 12B: eine perspektivische Ansicht der Verzahnungseinrichtungen gemäß Fig. 12A;
- Fig. 13A: eine schematische Ansicht eines anderen Ausführungsbeispiels von Verzahnungseinrichtungen;
- Fig. 13B: eine perspektivische Ansicht der Verzahnungseinrichtungen gemäß Fig. 13A;
- Fig. 14A: eine schematische Ansicht eines wiederum anderen Ausführungsbeispiels von Verzahnungseinrichtungen;
- Fig. 14B: eine perspektivische Ansicht der Verzahnungseinrichtungen gemäß Fig. 14A;
- Fig. 15A: eine schematische Ansicht eines wiederum anderen Ausführungsbeispiels von Verzahnungseinrichtungen;
- Fig. 15B: eine perspektivische Ansicht der Verzahnungseinrichtungen gemäß Fig. 15A;
- Fig. 16A: eine schematische Ansicht eines wiederum anderen Ausführungsbeispiels von Verzahnungseinrichtungen;
- Fig. 16B: eine perspektivische Ansicht der Verzahnungseinrichtungen gemäß Fig. 16A;
- Fig. 17A: eine Ansicht eines Ausführungsbeispiel einer Verschlussvorrichtung, darstellend insbesondere eine Verzahnungseinrichtung am ersten Verschlussteil;
- Fig. 17B: eine Ansicht des Ausführungsbeispiels gemäß Fig. 17A, darstellend eine Verzahnungseinrichtung am zweiten Verschlussteil;
- Fig. 17C: eine Draufsicht auf die Verschlussvorrichtung;
- Fig. 17D: eine Schnittansicht entlang der Linie A-A gemäß Fig. 17C;
- Fig. 18: eine Ansicht eines Ausführungsbeispiels einer Anwendung der Verschlussvorrichtung zum Spannen eines Schuhs;
- Fig. 19: eine Ansicht eines anderen Ausführungsbeispiels einer Anwendung der Verschlussvorrichtung zum Spannen eines Schuhs;
- Fig. 20: eine Ansicht eines wiederum anderen Ausführungsbeispiels einer Anwendung der Verschlussvorrichtung zum Spannen eines Schuhs;
- Fig. 21: eine Ansicht des Ausführungsbeispiels gemäß Fig. 20 beim Spannen des Schuhs;
- Fig. 22: eine Ansicht eines wiederum anderen Ausführungsbeispiels einer Anwendung der Verschlussvorrichtung zum Spannen eines Schuhs;
- Fig. 23: eine Ansicht eines wiederum anderen Ausführungsbeispiels einer Anwendung der Verschlussvorrichtung zum Spannen eines Schuhs;
- Fig. 24: eine Ansicht eines wiederum anderen Ausführungsbeispiels einer Anwendung der Verschlussvorrichtung zum Spannen eines Schuhs;
- Fig. 25: eine Ansicht eines Ausführungsbeispiels der Verschlussvorrichtung zum Spannen eines Hosenbeins;
- Fig. 26: eine Ansicht eines Ausführungsbeispiels einer Anwendung der Verschlussvorrichtung zum Verspannen eines Hosenbeins mit einem Schuh;
- Fig. 27: eine Ansicht eines anderen Ausführungsbeispiels einer Anwendung der Verschlussvorrichtung zum Spannen eines Hosenbeins an einem Schuh;
- Fig. 28: eine Ansicht eines Ausführungsbeispiels einer Anwendung der Verschlussvorrichtung zum Schließen eines Bekleidungsstücks;
- Fig. 29: eine Ansicht des Ausführungsbeispiels gemäß Fig. 28, bei geschlossenem Bekleidungsstück;
- Fig. 30: eine Ansicht eines anderen Ausführungsbeispiels einer Anwendung der Verschlussvorrichtung zum Schließen eines Bekleidungsstücks;
- Fig. 31: eine Ansicht eines Ausführungsbeispiels einer Anwendung der Verschlussvorrichtung zum Schließen und Spannen eines medizinischen Hilfsmittels;
- Fig. 32: eine Ansicht des Ausführungsbeispiels gemäß Fig. 31, in geschlossenem und gespanntem Zustand;
- Fig. 33: eine Ansicht eines anderen Ausführungsbeispiels einer Anwendung der Verschlussvorrichtung zum Schließen und Spannen eines medizinischen Hilfsmittels;
- Fig. 34: eine Ansicht des Ausführungsbeispiels gemäß Fig. 33 in geschlossenem Zustand;
- Fig. 35: eine Ansicht eines Ausführungsbeispiels einer Anwendung der Verschlussvorrichtung zum Schließen und Spannen eines anderen medizinischen Hilfsmittels;
- Fig. 36: eine Ansicht eines Ausführungsbeispiels einer Anwendung der Verschlussvorrichtung zum Schließen und Spannen eines Riemens eines Helms;
- Fig. 37: eine Ansicht des Ausführungsbeispiels gemäß Fig. 36 bei geschlossenem Riemen;
- Fig. 38: eine Ansicht eines Ausführungsbeispiels einer Anwendung der Verschlussvorrichtung zum Schließen und Spannen eines Gurts eines Helms;
- Fig. 39: eine Ansicht des Ausführungsbeispiels gemäß Fig. 38, bei geschlossenem Gurt;
- Fig. 40: eine Ansicht eines Ausführungsbeispiel einer Anwendung der Verschlussvorrichtung zum Aufhängen einer Lampe;
- Fig. 41: eine Ansicht eines Ausführungsbeispiels einer Anwendung der Verschlussvorrichtung zum Aufhängen eines Bildes;
- Fig. 42: eine Ansicht eines Ausführungsbeispiels einer Anwendung der Verschlussvorrichtung zum Anschließen einer Lampe an eine Steckdose;
- Fig. 43: eine Ansicht des Ausführungsbeispiels gemäß Fig. 42, angeschlossen an eine Steckdose;
- Fig. 44: eine Ansicht des Ausführungsbeispiels gemäß Fig. 43, bei gespanntem Kabel;
- Fig. 45: eine Ansicht eines Ausführungsbeispiels einer Anwendung der Verschlussvorrichtung zum Spannen eines Rollos;
- Fig. 46: eine Ansicht eines anderen Ausführungsbeispiels einer Anwendung der Verschlussvorrichtung zum Spannen eines Rollos;
- Fig. 47: eine Ansicht eines Ausführungsbeispiels einer Anwendung der Verschlussvorrichtung zum Spannen eines Gurts an einem Gepäckstück;
- Fig. 48: eine Ansicht eines Ausführungsbeispiels einer Anwendung der Verschlussvorrichtung zum Spannen eines Zugelements an einem Rucksack;
- Fig. 49: eine Ansicht eines Ausführungsbeispiels einer Anwendung der Verschlussvorrichtung zum Befestigen eines Gegenstands an einem Fahrrad;
- Fig. 50: eine Ansicht eines anderen Ausführungsbeispiels einer Anwendung der Verschlussvorrichtung zum Befestigen eines Gegenstands an einem Fahrrad;
- Fig. 51: eine Ansicht eines Ausführungsbeispiels einer Anwendung der Verschlussvorrichtung zum Festlegen eines Gegenstands im Kofferraum eines Kraftfahrzeugs;
- Fig. 52: eine Ansicht eines weiteren Ausführungsbeispiels einer Verschlussvorrichtung mit einem Zugelement in Form eines Gurts;
- Fig. 53: eine Frontalansicht der Verschlussvorrichtung gemäß Fig. 52;
- Fig. 54: eine Seitenansicht der Verschlussvorrichtung;
- Fig. 55: eine Draufsicht auf die Verschlussvorrichtung;
- Fig. 56: eine Schnittansicht entlang der Linie A-A gemäß Fig. 55;
- Fig. 57A: eine Ansicht der Verschlussvorrichtung zum Verbinden zweier Gurtenden miteinander;
- Fig. 57B: eine Ansicht der Verschlussvorrichtung in geschlossenem Zustand;
- Fig. 58: eine Ansicht eines anderen Ausführungsbeispiels einer Verschlussvorrichtung;
- Fig. 59: eine Ansicht eines weiteren Ausführungsbeispiels einer Verschlussvorrichtung zum Verbinden zweier Gurtenden miteinander;
- Fig. 60: eine Ansicht der Verschlussvorrichtung in geschlossener Stellung;
- Fig. 61A: eine Draufsicht auf die Verschlussvorrichtung, mit einem Spannhebel in einer Stellung zum Ansetzen der Verschlussteile aneinander;
- Fig. 61B: eine vergrößerte Ansicht im Ausschnitt A gemäß Fig. 61A;
- Fig. 62A: eine Draufsicht auf die Verschlussvorrichtung beim Spannen eines Zugelements; und
- Fig. 62B: eine vergrößerte Ansicht im Ausschnitt A gemäß Fig. 62A.

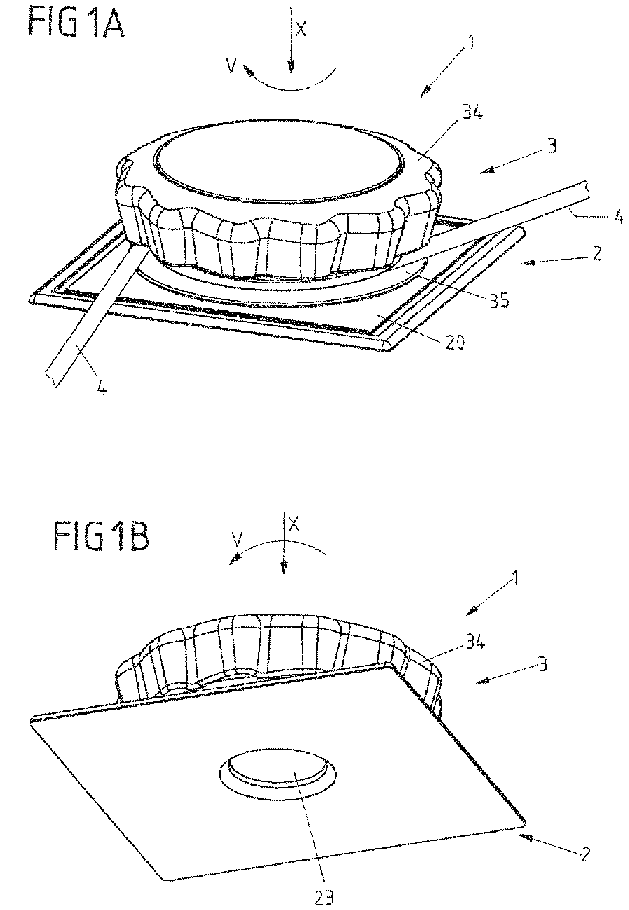

Fig. 1A, 1B bis 5A-5C zeigen ein Ausführungsbeispiel einer Verschlussvorrichtung 1, bei der Verschlussteile 2, 3 entlang einer Schließrichtung X aneinander angesetzt werden können und in einer Schließstellung aneinander gehalten sind.

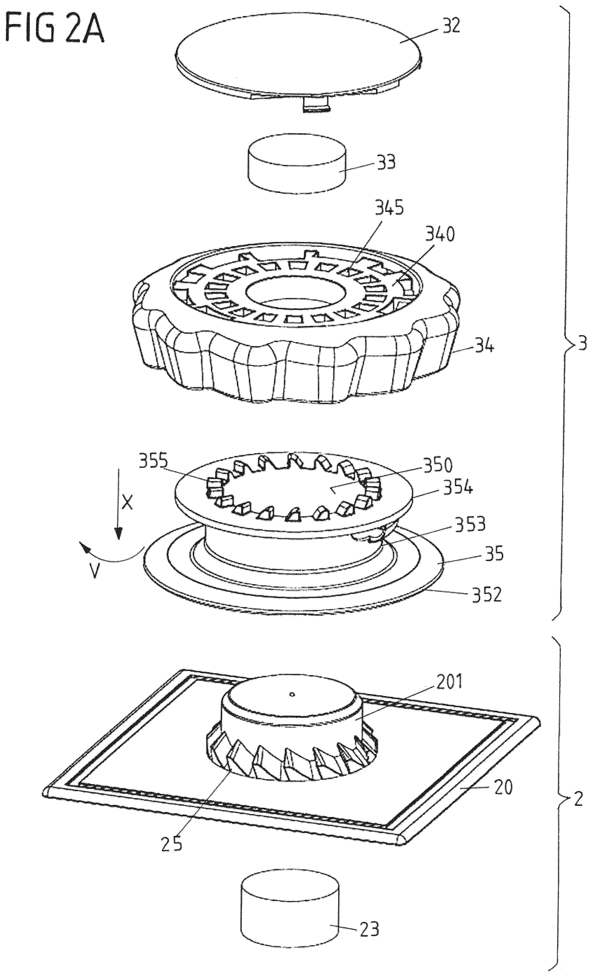

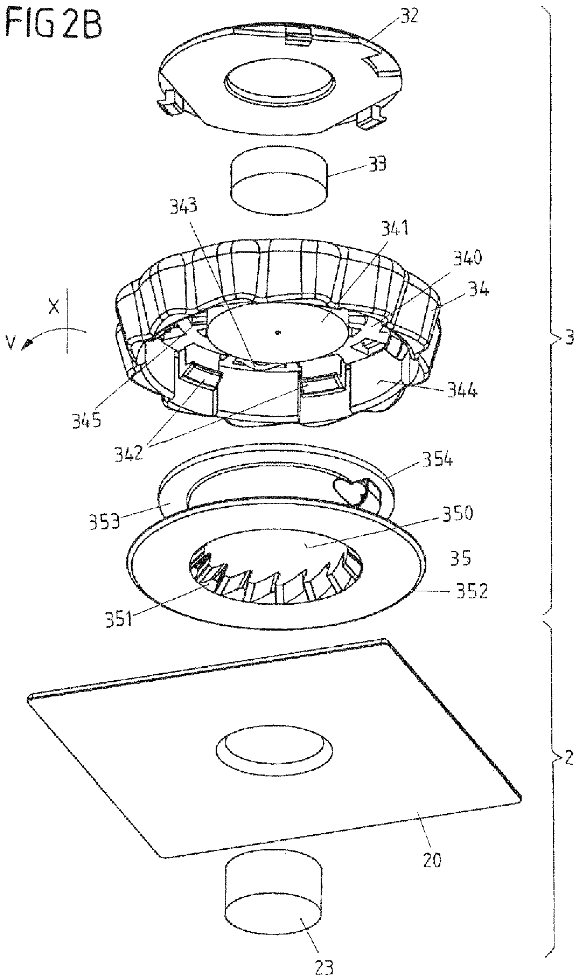

Wie aus den Explosionsansichten gemäß Fig. 2A und 2B ersichtlich, weist das erste Verschlussteil 2 einen Grundkörper 20 auf, an dem ein Zylinderabschnitt 201 geformt ist. Um den Zylinderabschnitt 201 läuft eine Verzahnung 25 um, deren Zähne eine Sägezahnform aufweisen. An dem Grundkörper 20 ist zudem ein Magnetelement 23 angeordnet.

Das zweite Verschlussteil 3 weist ein Betätigungselement 34 in Form eines Handgriffs und ein Wickelelement 35 auf, das eine durch Ringbunde 352, 354 axial begrenzte Rille 353 ausbildet, in der ein Zugelement 4 zum Aufwickeln auf das Wickelelement 35 aufgenommen werden kann. An dem Betätigungselement 34 ist ein Magnetelement 33 befestigt, das magnetisch anziehend mit dem Magnetelement 23 am ersten Verschlussteil 2 zusammenwirkt.

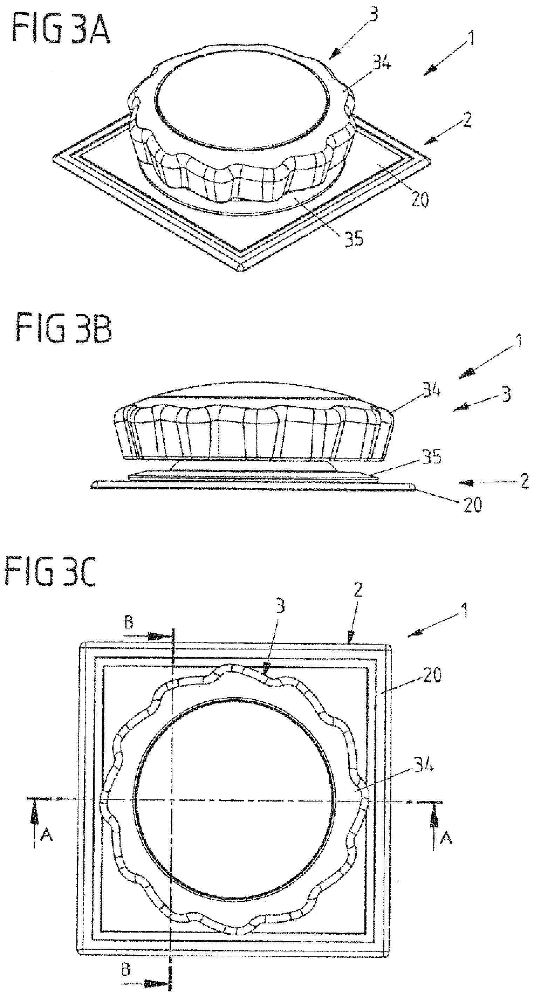

An einer dem ersten Verschlussteil 2 zugewandten Seite ist eine Verzahnung 351 an dem Wickelelement 35 geformt. Bei Ansetzen der Verschlussteile 2, 3 aneinander gelangt diese Verzahnung 351 des Wickelelements 35 mit der Verzahnung 25 am Grundkörper 20 des ersten Verschlussteils 2 in Eingriff, wie dies in Fig. 3A-3F dargestellt ist.

Bei aneinander angesetzten Verschlussteilen 2, 3 greift der Zylinderabschnitt 201 in eine zentrale Öffnung 350 des Wickelelements 35 ein, sodass darüber das Wickelelement 35 verdrehbar und axial bewegbar an dem ersten Verschlussteil 2 gelagert ist.

Sowohl die Verzahnung 351 des Wickelelements 35 als auch die Verzahnung 25 des ersten Verschlussteils 2 weisen eine Sägezahnform auf. Dies ermöglicht, in der Schließstellung der Verschlussvorrichtung 1 das zweite Verschlussteil 3 mit dem Wickelelement 35 und dem Betätigungselement 34 in eine Wickelrichtung V gegenüber dem ersten Verschlussteil 2 zu verdrehen, wobei die Zähne der Verzahnungen 25, 351 aufeinander aufgleiten und übereinander hinweg bewegt werden, unter axialer Auslenkung der Verschlussteile 2, 3 zueinander. Die Verzahnungen 25, 351 stellen somit eine Art Freilauf zur Verfügung, der bei aneinander angesetzten Verschlussteilen 2, 3 ein Verdrehen des Wickelelements 35 in die Wickelrichtung V ermöglicht, um ein an dem Wickelelement 35 angeordnetes Zugelement 4 zu spannen, eine Bewegung entgegen der Wickelrichtung V hingegen sperrt, sodass das Zugelement 4 bei aneinander angesetzten Verschlussteilen 2, 3 nicht entgegen der Wickelrichtung V abgewickelt werden kann.

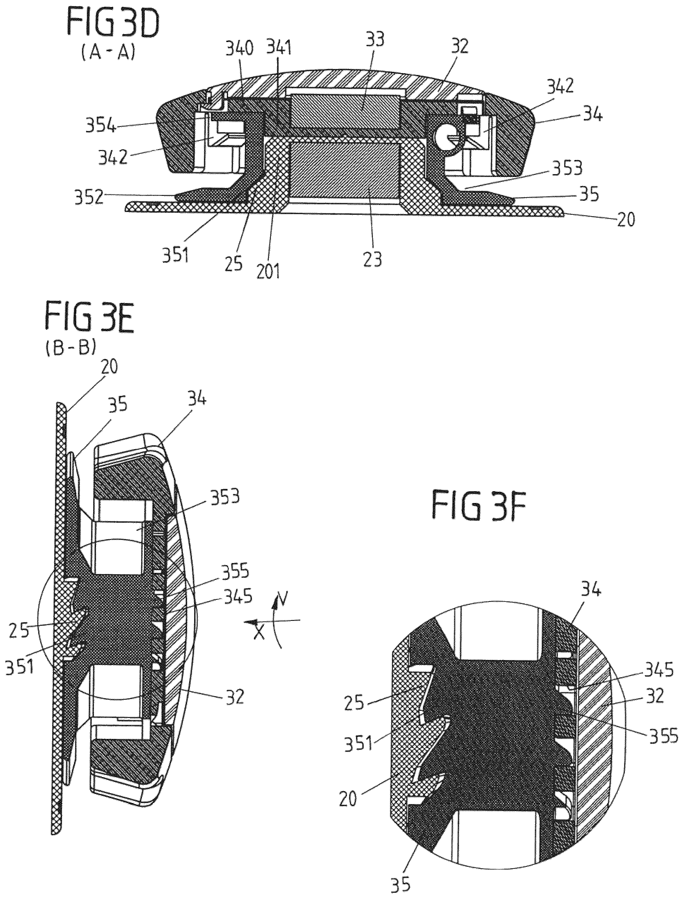

Die Zähne der Verzahnungen 25, 351 bilden, wie zum Beispiel aus Fig. 3E und 3F ersichtlich, jeweils einen Hinterschnitt aus, der bewirkt, dass die Verzahnungen 25, 351 bei Belastung der Verschlussteile 2, 3 zueinander entgegen der Wickelrichtung V sperrend miteinander in Eingriff sind und somit eine Drehbewegung des Wickelelements 35 entgegen der Wickelrichtung V zu dem ersten Verschlussteil 2 verhindert ist. Der Eingriff ist drehfest, belastbar und selbstverstärkend, aufgrund der hinterschnittenen, bei Belastung entgegen der Wickelrichtung V zusammenwirkenden Zahnflanken der Verzahnungen 25, 351.

Das Wickelelement 35 ist drehbar an dem Betätigungselement 34 gelagert und ist dazu über den Ringbund 354 umgreifende Halteelemente 342, die nach innen von einer Basisfläche 340 des Betätigungselements 34 vorstehen, drehbar und entlang der Schließrichtung X um einen Verstellweg axial verschiebbar an dem Betätigungselement 34 gehalten. Die Halteelemente 342 umgreifen den Ringbund 354 und stellen darüber eine Verbindung zwischen dem Wickelelement 35 und dem Betätigungselement 34 her.

Das Betätigungselement 34 und das Wickelelement 35 sind zudem über Eingriffseinrichtungen 345, 355 derart koppelbar, dass das Wickelelement 35 stellungsabhängig zusammen mit dem Betätigungselement 34 oder unabhängig vom Betätigungselement 34 bewegbar ist. Eine erste Eingriffseinrichtung 345 ist hierbei in der Basisfläche 340 in Form von umfänglich um die Schließrichtung X aneinander angereihten Öffnungen gebildet, die mit einer an dem Ringbund 354 geformten und axial von dem Ringbund 354 vorstehenden zweiten Eingriffseinrichtung 355 in Wirkverbindung bringbar ist, um darüber das Betätigungselement 34 zur Kraftübertragung in die Wickelrichtung V mit dem Wickelelement 35 zu koppeln.

An dem Betätigungselement 34 ist ein Deckelelement 32 angeordnet, das das Betätigungselement 34 an einer von dem Wickelelement 35 abgewandten Seite verschließt und dazu mit dem Betätigungselement 34 verrastet ist.

Das Betätigungselement 34 fasst mit einer umfänglichen Seitenwandung 344 einen Aufnahmeraum ein, innerhalb dessen das Wickelelement 35 mit seinem Ringbund 354 aufgenommen und axial verschiebbar gehalten ist. Von der Basisfläche 340 steht hierbei zentral ein Zylindervorsprung 341 vor, der in die zentrale Öffnung 350 des Wickelelements 35 eingreift und darüber das Betätigungselement 34 und das Wickelelement 35 um die Schließrichtung X drehbar aneinander lagert.

Bei Ansetzen der Verschlussteile 2, 3 aneinander gelangt, aufgrund magnetisch anziehender Wechselwirkung der Magnetelemente 23, 33, die Verzahnung 351 innenseitig der Öffnung 350 des Wickelelements 35 in Eingriff mit der Verzahnung 25 um den Zylinderabschnitt 201, der zudem in Eingriff gelangt mit der Öffnung 350 des Wickelelements 35, wie dies in Fig. 3A bis 3F dargestellt ist. Weil aufgrund der magnetischen Anziehungskraft zwischen den Magnetelementen 23, 33 zudem das Betätigungselement 34 hin zu dem Zylinderabschnitt 201 des Körpers 20 des ersten Verschlussteils 2 gezogen und somit mit seiner Basisfläche 340 dem Ringbund 354 des Wickelelements 35 angenähert wird, gelangen die Eingriffseinrichtungen 345, 355 des Betätigungselements 34 und des Wickelelements 35 miteinander in Eingriff, sodass das Betätigungselement 34 und das Wickelelement 35 in eine funktionale Wirkverbindung miteinander gelangen, wie dies in den Schnittansichten gemäß Fig. 3D bis 3F dargestellt ist.

Aufgrund der Wirkverbindung zwischen dem Betätigungselement 34 und dem Wickelelement 35 in der Schließstellung wird bei einem Verdrehen des Betätigungselements 34 in die Wickelrichtung V das Wickelelement 35 zusammen mit dem Betätigungselement 34 bewegt und somit um die Schließrichtung X verdreht, weil eine Betätigungskraft über den Eingriff der Eingriffseinrichtungen 345, 355 auf das Wickelelement 35 übertragen wird. Dabei gleiten die Verzahnungen 25, 351 übereinander, sodass das Wickelelement 35 zu dem ersten Verschlussteil 2 verdreht und ein Zugelement 4 somit auf das Wickelelement 35 aufgewickelt wird.

Aufgrund der sägezahnförmigen, hinterschnittenen Ausbildung der Verzahnungen 25, 351 kann eine über das Zugelement 4 eingeleitete Belastung entgegen der Wickelrichtung V nicht zu einem Zurückdrehen des Wickelelements 35 führen. Dies ist über den Eingriff der Verzahnungen 25, 351 ineinander verhindert.

Wie insbesondere aus den Schnittansichten gemäß Fig. 3E und 3F ersichtlich, ist die Eingriffseinrichtung 355 des Wickelelements 35 sägezahnförmig ausgebildet, mit sägezahnförmigen Zähnen mit einer schrägen Zahnflanke und einer nahezu senkrechten Zahnflanke. Diese sägezahnförmige Verzahnung 355 greift in der Eingriffsstellung in die die Eingriffseinrichtung 345 ausbildenden Öffnungen in der Basisfläche 340 des Betätigungselements 34 ein, wobei dieser Eingriff derart ist, dass Betätigungskräfte in die Wickelrichtung V vom Betätigungselement 34 in das Wickelelement 35 eingeleitet werden und das Wickelelement 35 somit zusammen mit dem Betätigungselement 34 in die Wickelrichtung V bewegt wird, bei einem Verdrehen des Betätigungselements 34 entgegen der Wickelrichtung V die Eingriffseinrichtungen 345, 355 jedoch übereinander gleiten können und somit eine Relativbewegung des Betätigungselements 34 entgegen der Wickelrichtung V zu dem Wickelelement 35 zulassen.

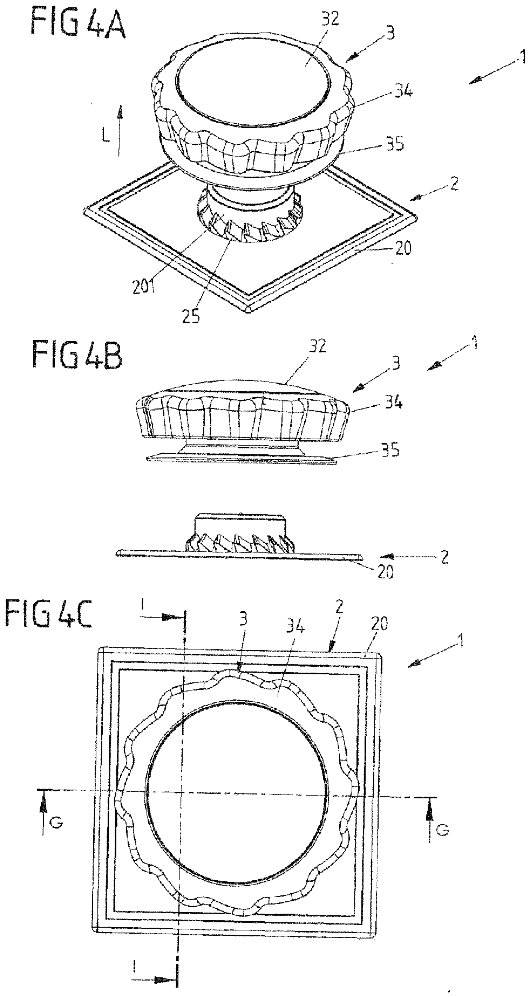

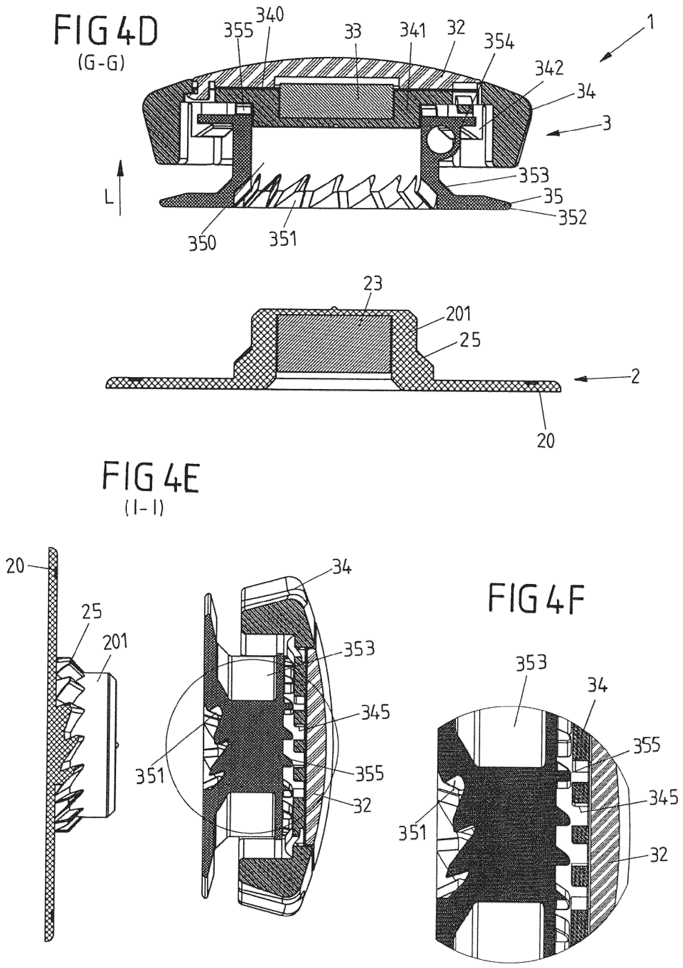

Sollen die Verschlussteile 2, 3 voneinander gelöst werden, so kann das zweite Verschlussteil 3 einfach entgegen der Schließrichtung X in eine Löserichtung L von dem ersten Verschlussteil 2 abgezogen werden, wie dies in Fig. 4A bis 4F dargestellt ist, wodurch die Verzahnungen 25, 351 außer Eingriff voneinander gelangen und die Verschlussteile 2, 3 voneinander getrennt werden.

Weil die magnetische Anziehung zwischen den Magnetelementen 23, 33 hierbei aufgehoben wird, gelangen die Eingriffseinrichtungen 345, 355 außer Eingriff voneinander, sodass das Wickelelement 35 unabhängig von dem Betätigungselement 34 verdreht werden kann. Dies ermöglicht beispielsweise ein freies Abspulen eines an dem Wickelelement 35 angeordneten Zugelements 4 bei geöffneter Verschlussvorrichtung 1.

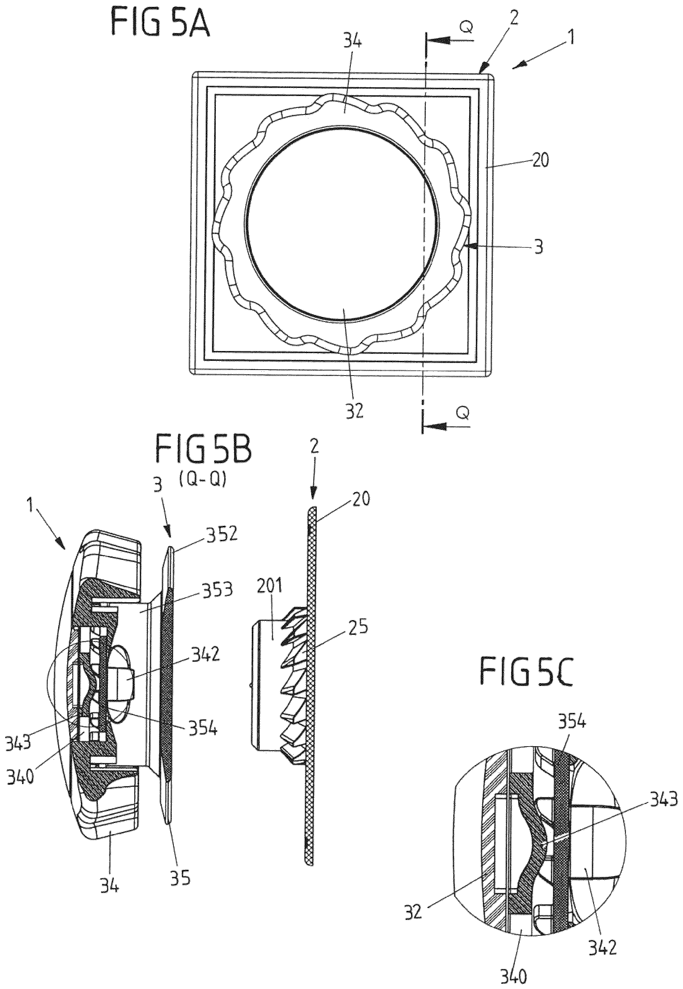

Es kann vorgesehen sein, dass die Eingriffseinrichtungen 345, 355 des Betätigungselements 34 und des Wickelelements 35 beim Öffnen der Verschlussvorrichtung 1 zum Beispiel durch Schwerkraftwirkung außer Eingriff gelangen. In einer vorteilhaften Ausgestaltung ist jedoch das Betätigungselement 34, wie dies in Fig. 5A bis 5C dargestellt ist, über Federelemente 343, die innenseitig der Basisfläche 340 angeordnet und bei dem dargestellten Ausführungsbeispiel durch einstückig angeformte Federvorsprünge gebildet sind, gegenüber dem Wickelelement 35 in Richtung der Lösestellung, in der die Eingriffseinrichtungen 345, 355 nicht miteinander in Eingriff sind, federvorgespannt, sodass das Betätigungselement 34 und das Wickelelement 35 bei Öffnen der Verschlussvorrichtung 1 selbsttätig und zuverlässig außer Eingriff voneinander gelangen und somit das Wickelelement 35 bei geöffneter Verschlussvorrichtung 1 unabhängig von dem Betätigungselement 34 verdreht werden kann.

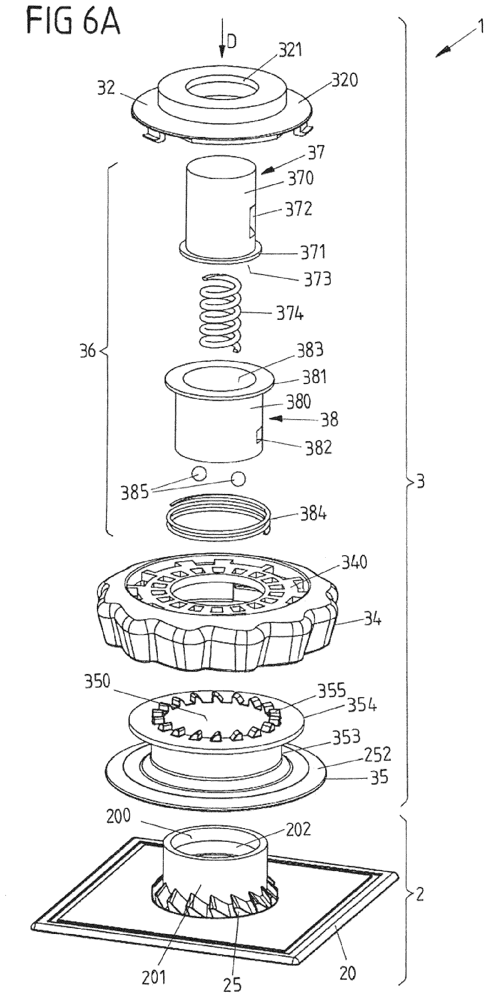

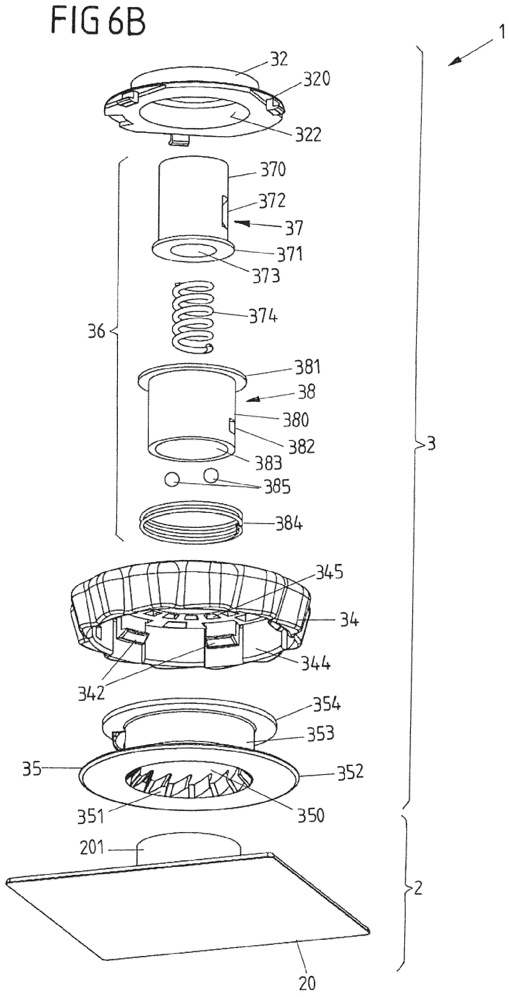

Fig. 6A, 6B bis 10A-10D zeigen ein anderes Ausführungsbeispiel, das mit Blick auf die zwischen dem ersten Verschlussteil 2 und dem Wickelelement 35 wirkenden Verzahnungen 25, 351 und mit Blick auf die zwischen dem Wickelelement 35 und dem Betätigungselement 34 des zweiten Verschlussteils 3 wirkenden Eingriffseinrichtungen 345, 355 identisch wie das vorangehend anhand von Fig. 1A, 1B bis 5A-5C beschriebene Ausführungsbeispiel ausgestaltet ist, sodass diesbezüglich auf die vorangehenden Erläuterungen verwiesen werden soll.

Zusätzlich weist das Ausführungsbeispiel gemäß Fig. 6A, 6B bis 10A-10D eine Rasteinrichtung 36 auf, die an dem zweiten Verschlussteil 3 angeordnet ist und dazu dient, die Verschlussteile 2, 3 in der Schließstellung derart miteinander zu verrasten, dass das zweite Verschlussteil 3 entgegen der Schließrichtung X rastend und somit formschlüssig an dem ersten Verschlussteil 2 gehalten ist.

Das Verwenden einer solchen Rasteinrichtung 36 ermöglicht eine nicht magnetische Ausgestaltung der Verschlussvorrichtung 1. Grundsätzlich kann somit bei der Verschlussvorrichtung 1 auf Magnetelemente verzichtet werden. Denkbar und möglich ist aber auch, zusätzlich zu der Rasteinrichtung 36 auch Magnetelemente zu verwenden, wie diese bei dem Ausführungsbeispiel gemäß Fig. 1A, 1B bis 5A-5C vorhanden sind.

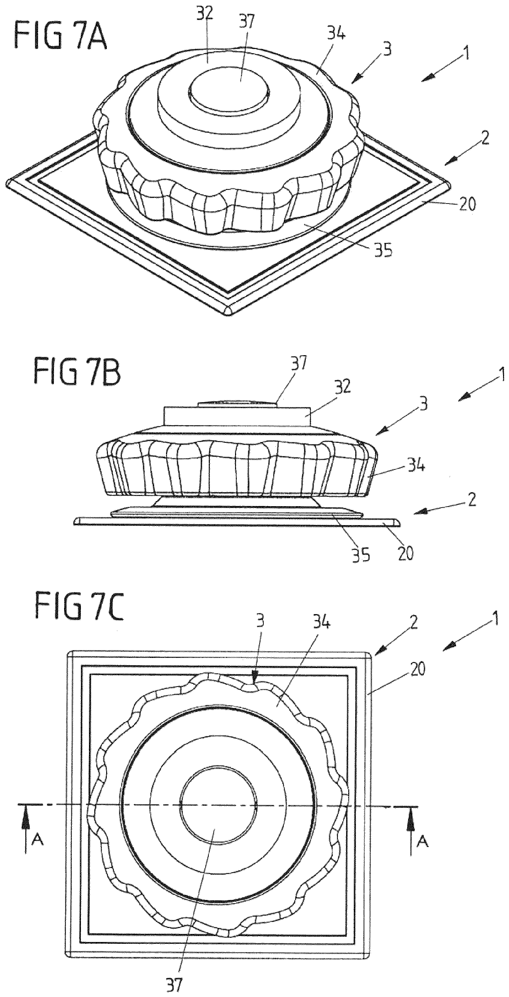

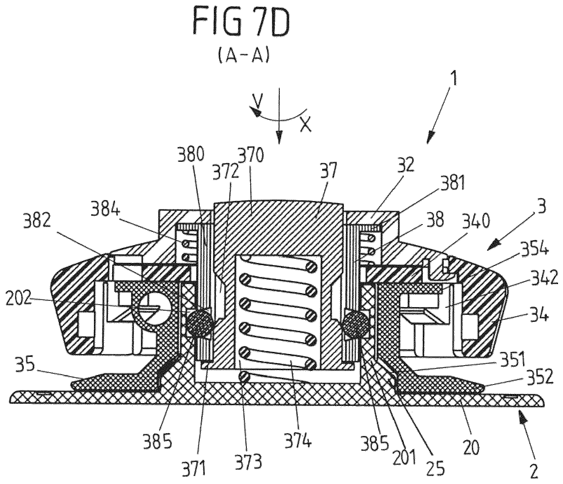

Die Rasteinrichtung 36 weist ein Eingriffselement 38 auf, das - wie dies aus Fig. 6B in Zusammenschau mit Fig. 7D ersichtlich ist - mit einem Ringbund 381 axial beweglich in einem Aufnahmeraum 322 innerhalb des an das Betätigungselement 34 angesetzten Deckelelements 32 aufgenommen und über ein Federelement 384 in Form einer Spiralfeder gegenüber der Basisfläche 340 des Betätigungselements 34 federvorgespannt ist. An einem sich von dem Ringbund 381 erstreckenden, zylindrischen Körper 380 sind diametral gegenüberliegend Aufnahmeöffnungen 382 geformt, in denen Rastelemente 385 in Form von Kugeln aufgenommen sind, die dazu dienen, in der Schließstellung der Verschlussvorrichtung 1 (Fig. 7A bis 7D) rastend in einen Rasteingriff 202 in Form einer innenseitig einer Öffnung 200 des Zylinderabschnitts 201 des ersten Verschlussteils 2 umlaufenden Ringnut einzugreifen, sodass darüber, wie dies aus Fig. 7D ersichtlich ist, eine Verrastung zwischen dem in der Schließstellung in die Öffnung 200 des Zylinderabschnitts 201 eingreifenden Eingriffselement 38 und dem Zylinderabschnitt 201 besteht und darüber die Verschlussteile 2, 3 miteinander verrastet sind.

Innerhalb einer zentralen Öffnung 383 des Eingriffselements 38 ist ein Bedienelement 37 axial entlang der Schließrichtung X geführt. Das Bedienelement 37 weist eine zylindrische Gestalt auf, ist über ein in einer Öffnung 373 in Form eines Sacklochs einliegendes Federelement 374 in der Schließstellung an dem ersten Verschlussteil 2 elastisch abgestützt und zudem über einen endseitigen Ringbund 371 mit dem Eingriffselement 38 wegbegrenzend in Anlage, wenn es nicht gegenüber dem Eingriffselement 38 betätigt ist.

Wie aus Fig. 6A, 6B in Zusammenschau mit Fig. 7D ersichtlich, weist das Bedienelement 37 an seiner äußeren Umfangsfläche zwei diametral gegenüberliegende Entsperröffnungen 372 auf, die in der Schließstellung auf einer axial unterschiedlichen Höhe zu den Rastelementen 385 angeordnet sind, wie dies aus Fig. 7D ersichtlich ist, sodass die Rastelemente 385 mit der äußeren Umfangsfläche des zylindrischen Körpers 370 des Bedienelements 37 in Anlage sind und darüber in rastendem Eingriff mit dem Rasteingriff 202 innenseitig des Zylinderabschnitts 201 gehalten werden.

In der Schließstellung (Fig. 7A bis 7D) wird das Betätigungselement 34 aufgrund der Federvorspannung des Federelements 384 in Richtung des ersten Verschlussteils 2 gedrückt, und durch Anlage der Basisfläche 340 an dem Ringbund 354 des Wickelelements 35 wird das Wickelelement 35 in Eingriff mit der Verzahnung 25 des ersten Verschlussteils 2 gedrückt, wie dies aus Fig. 7D ersichtlich ist. In der Schließstellung ist das zweite Verschlussteil 3 somit rastend an dem ersten Verschlussteil 2 gehalten, bei bestehendem Eingriff zwischen den Eingriffseinrichtungen 345, 355 des Betätigungselements 34 und des Wickelelements 35 und zudem bei Verzahnungseingriff zwischen dem Wickelelement 35 und dem ersten Verschlussteil 2.

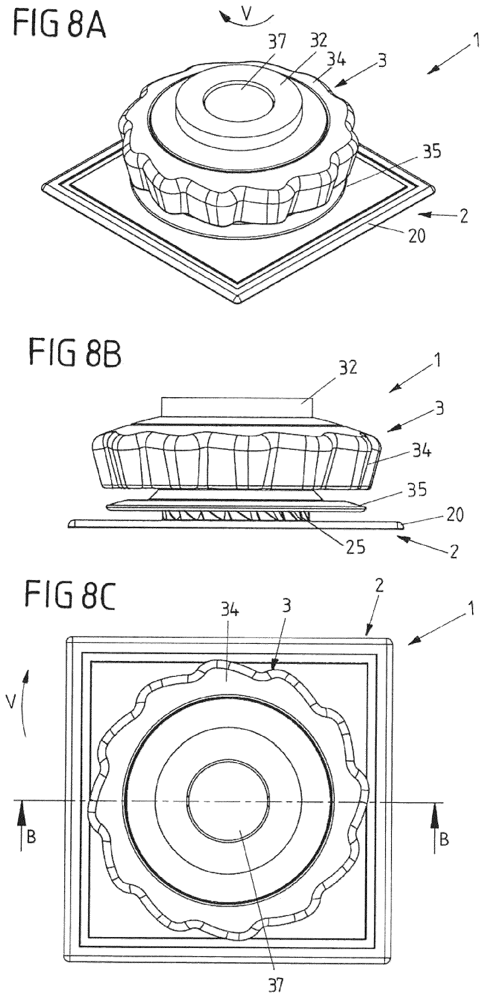

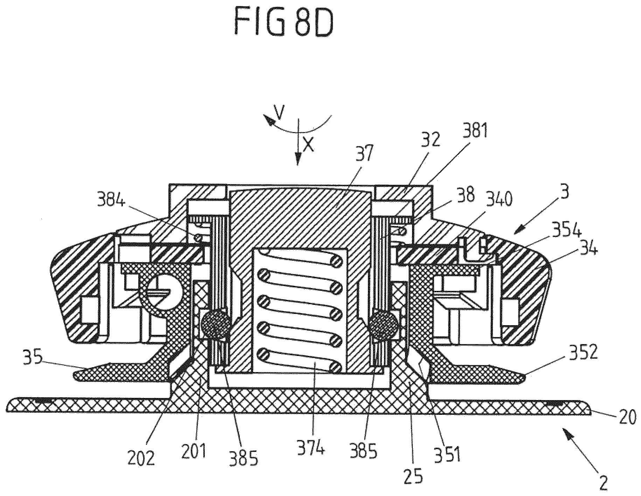

Wird in der Schließstellung der Verschlussvorrichtung 1 das Betätigungselement 34 und somit, aufgrund des Eingriffs der Eingriffseinrichtungen 345, 355, das Wickelelement 35 zusammen mit dem Betätigungselement 34 in die Wickelrichtung V verdreht, so gleiten die Verzahnungen 25, 351 übereinander, was eine (geringfügige) axiale Bewegung des Wickelelements 35 und darüber des Betätigungselements 34 bewirkt, wie dies in Fig. 8A bis 8D dargestellt ist. Weil dabei das Eingriffselement 38 der Rasteinrichtung 36 über die Rastelemente 385 axial zu dem Zylinderabschnitt 201 des ersten Verschlussteils 2 festgehalten wird, erfolgt die axiale Auslenkung des Wickelelements 35 und des Betätigungselements 34 entgegen der Federvorspannung des Federelements 384, wie dies in Fig. 8D dargestellt ist.

Nach erfolgter Verdrehung des Betätigungselements 34 und des Wickelelements 35 gelangen die Verzahnungen 25, 351 dann, aufgrund der Federvorspannung des Federelements 384, wiederum in Eingriff miteinander, unter Anlage des Ringbunds 352 an dem Körper 20 des ersten Verschlussteils 2 (entsprechend der Stellung gemäß Fig. 7A bis 7D).

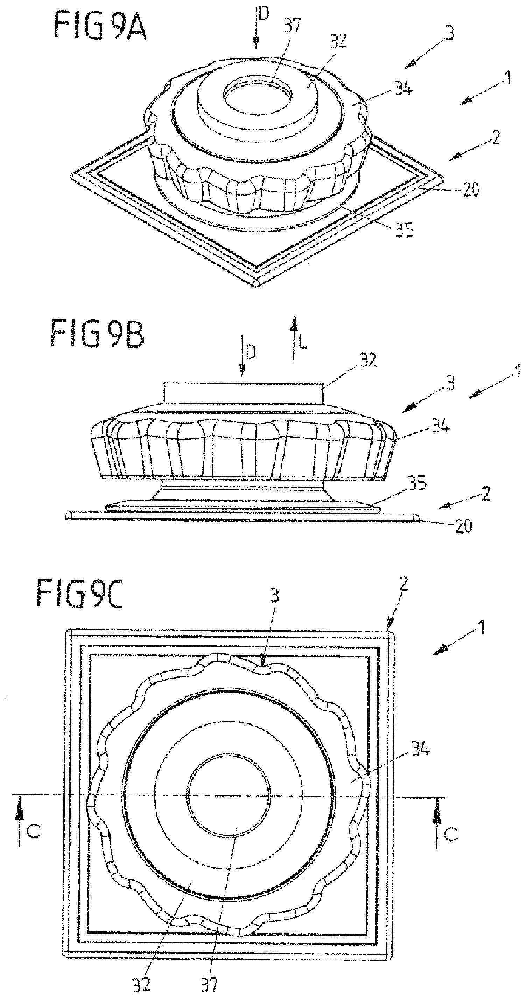

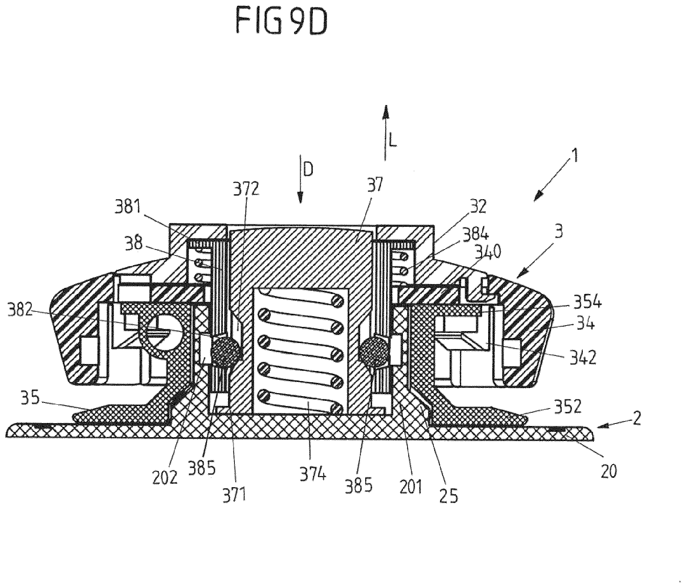

Zum Lösen der Verschlussteile 2, 3 voneinander kann ein Nutzer das Bedienelement 37 in eine Betätigungsrichtung D in das Eingriffselement 38 hineindrücken, wie dies in Fig. 9A bis 9D dargestellt ist. Dadurch wird der Körper 370 des Bedienelements 37 axial entlang der Schließrichtung X innerhalb des Eingriffselements 38 verstellt, sodass die Entsperröffnungen 372 auf die axial gleiche Höhe wie die Rastelemente 385 gelangen und die Rastelemente 385 somit radial nach innen ausweichen können, wie dies in Fig. 9D dargestellt ist. Auf diese Weise wird die sperrende Verrastung zwischen dem Eingriffselement 38 und dem Zylinderabschnitt 201 aufgehoben, sodass die Verschlussteile 2, 3 entgegen der Schließrichtung X, nämlich in die Löserichtung L, voneinander abgenommen werden können.

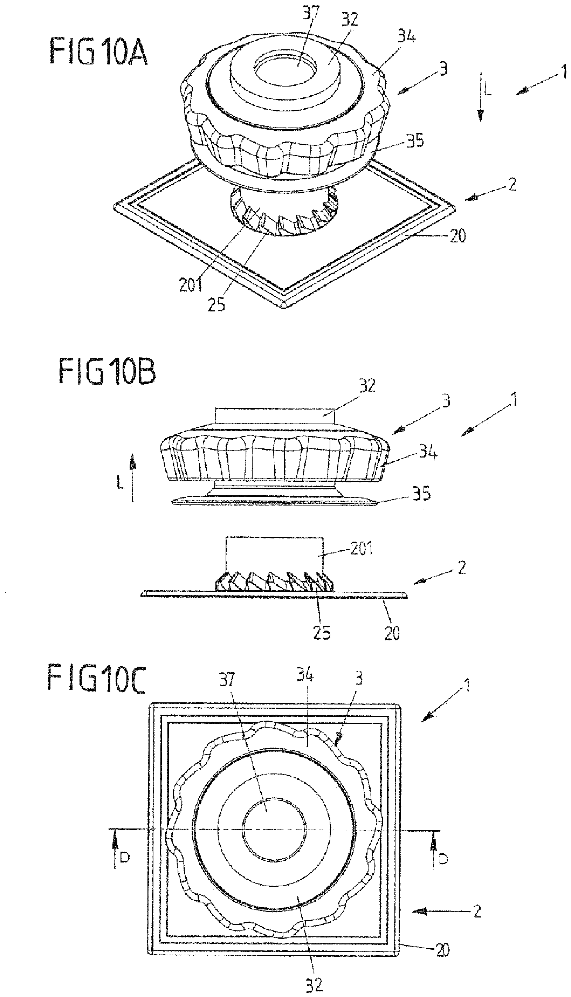

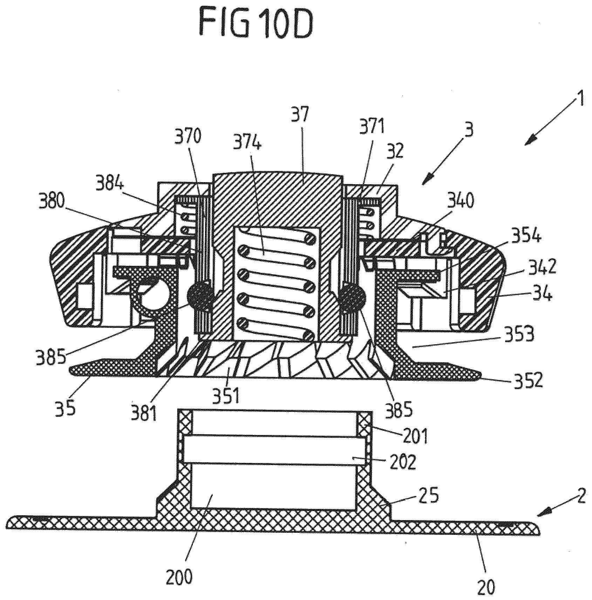

Fig. 10A bis 10D zeigen die Verschlussvorrichtung 1 in ihrer geöffneten Stellung. In der geöffneten Stellung sind die Verschlussteile 2, 3 voneinander getrennt, wobei aufgrund Schwerkraftwirkung oder auch aufgrund einer Federvorspannung das Betätigungselement 34 und das Wickelelement 35 mit ihren Eingriffseinrichtungen 345, 355 außer Eingriff gebracht sind, sodass das Wickelelement 35 unabhängig von dem Betätigungselement 34 verdreht und somit ein an dem Wickelelement 35 angeordnetes Zugelement gegebenenfalls abgespult werden kann.

Zum erneuten Schließen der Verschlussvorrichtung 1 kann das zweite Verschlussteil 3 in die Schließrichtung X wiederum an das erste Verschlussteil 2 angesetzt werden, wodurch das Eingriffselement 38 in Eingriff mit der Öffnung 200 des Zylinderabschnitts 201 gelangt und die Rastelemente 385 rastend in den Rasteingriff 202 in Form der umlaufenden Nut innerhalb des Zylinderabschnitts 201 eingreifen. Dadurch gelangen auch die Verzahnungen 25, 351 in Verzahnungseingriff miteinander, und die Verschlussvorrichtung 1 nimmt die in Fig. 7A bis 7D dargestellte Schließstellung ein.

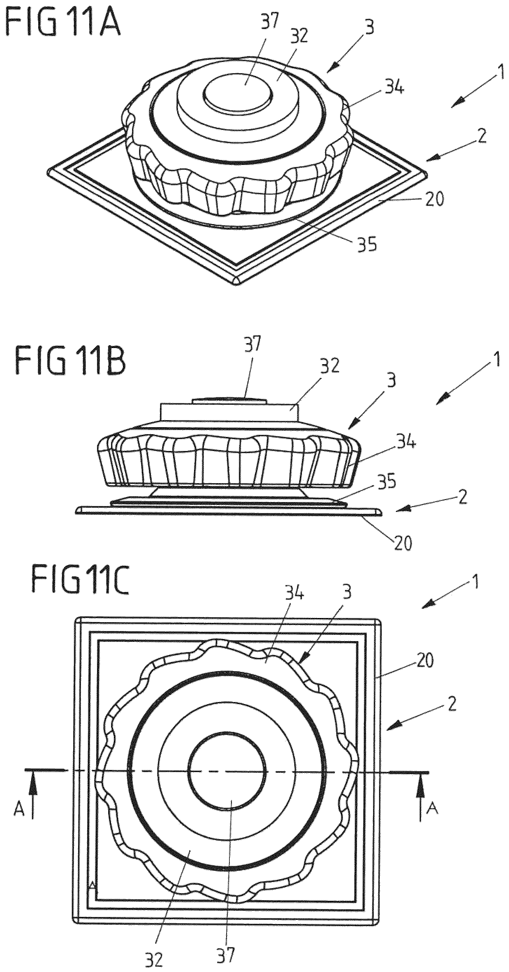

Fig. 11A bis 11E zeigen zwei gegenüber dem Ausführungsbeispiel gemäß Fig. 6A, 6B bis 10A-10D modifizierte Ausführungsbeispiele, die einerseits magnetisch und andererseits nicht magnetisch ausgestaltet sind.

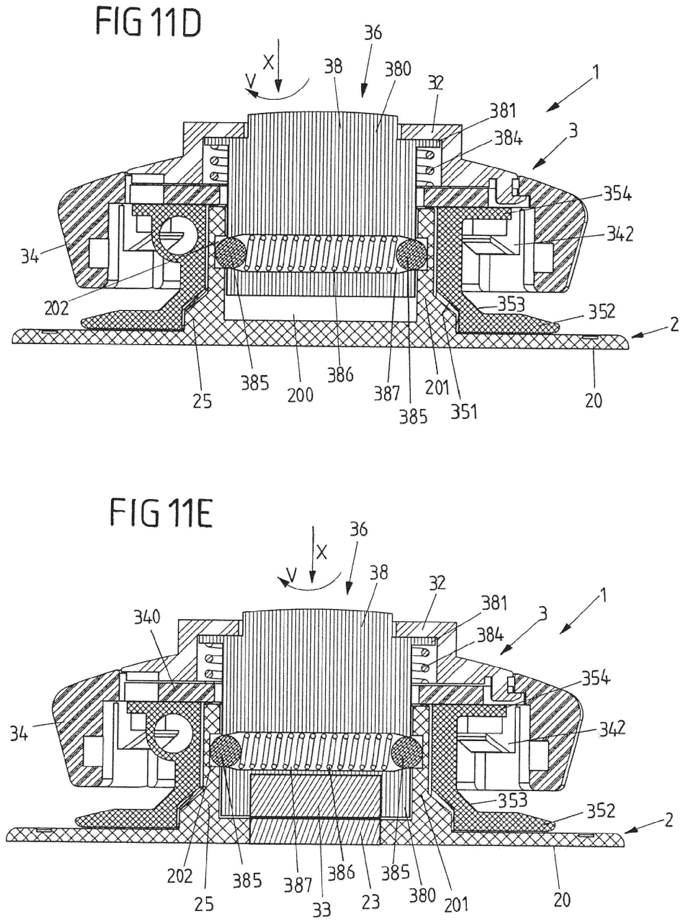

In ihrer äußeren Ansicht gleichen sich die beiden Ausführungsbeispiele (siehe Fig. 11A bis 11C), sind aber in ihrer inneren Ausgestaltung (geringfügig) unterschiedlich, wie sich dies aus den Ansichten gemäß Fig. 11D und 11E ergibt.

Bei beiden Ausführungsbeispielen weist die Rasteinrichtung 36 ein Eingriffselement 38 auf, an dem eine durchgehende, quer zur Schließrichtung X erstreckte Bohrung 387 gebildet ist, in der zwei kugelförmige Rastelemente 385 angeordnet und über ein Federelement 386 gegeneinander vorgespannt sind. Bei Ansetzen der Verschlussteile 2, 3 aneinander gelangt das Eingriffselement 38 in Eingriff mit dem Zylinderabschnitt 201, und die Rastelemente 385 verrasten mit dem Rasteingriff 202 innenseitig der Öffnung 200 des Zylinderabschnitts 201, wie dies aus Fig. 11D und 11E ersichtlich ist.

Die Verrastung wird hierbei aufgrund der Federvorspannung über das Federelement 386 in der Schließstellung gehalten. Soll die Verrastung gelöst werden, so kann das zweite Verschlussteil 3 entgegen der Schließrichtung X bei hinreichender Kraftwirkung von dem ersten Verschlussteil 2 abgezogen werden, wodurch die Rastelemente 385 selbsttätig, durch Auflaufen auf die obere Kante des nutförmigen Rasteingriffs 202, radial nach innen versetzt werden und somit außer Eingriff von dem Rasteingriff 202 gelangen. Die Verrastung zwischen den Verschlussteilen 2, 3 kann somit ohne gesonderte Betätigung des Eingriffselements 38 gelöst werden.

Während das Ausführungsbeispiel gemäß Fig. 11D rein mechanisch ausgebildet ist, ist das modifizierte Ausführungsbeispiel gemäß Fig. 11E magnetisch ausgebildet dadurch, dass ein Magnetelement 23 an dem Körper 20 des ersten Verschlussteils 2 und zudem ein Magnetelement 33 an dem Körper 380 des Eingriffselements 38 angeordnet ist, wie dies aus der Schnittansicht gemäß Fig. 11E ersichtlich ist. Die Verschlussteile 2, 3 wirken somit (auch) magnetisch zusammen, was das Ansetzen der Verschlussteile 2, 3 erleichtert.

Im Übrigen sind die Ausführungsbeispiele gemäß Fig. 11D und 11E funktional identisch den vorangehend beschriebenen Ausführungsbeispielen, sodass diesbezüglich auf das oben Ausgeführte verwiesen werden soll.

Bei den vorangehend beschriebenen Ausführungsbeispielen können die Verzahnungseinrichtungen 25, 351 auf Seiten des ersten Verschlussteils 2 und des zweiten Verschlussteils 3 grundsätzlich ganz unterschiedlich ausgeführt sein, um in der Schließstellung einen (zumindest bis zu einem gewissen Grenzdrehmoment belastbaren) formschlüssigen Halt zwischen den Verschlussteilen 2, 3 herzustellen.

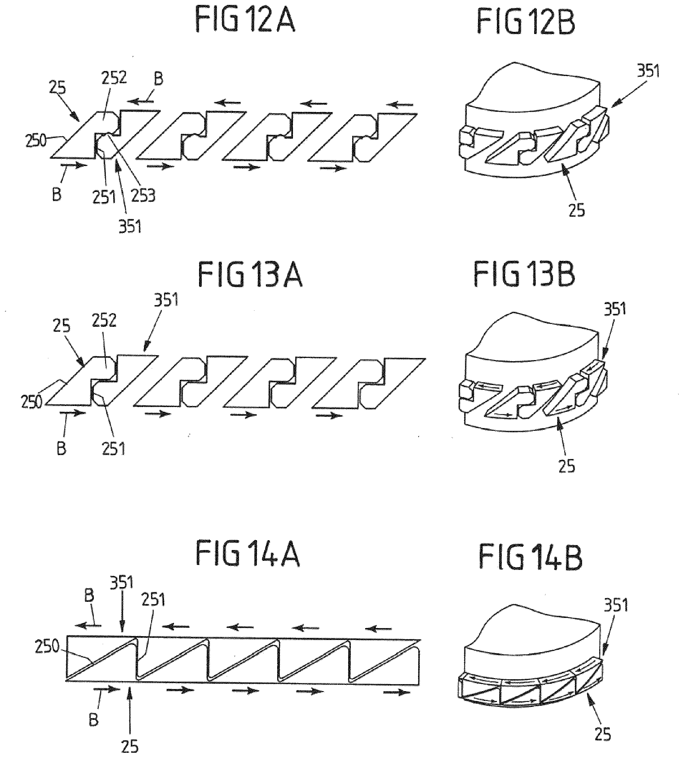

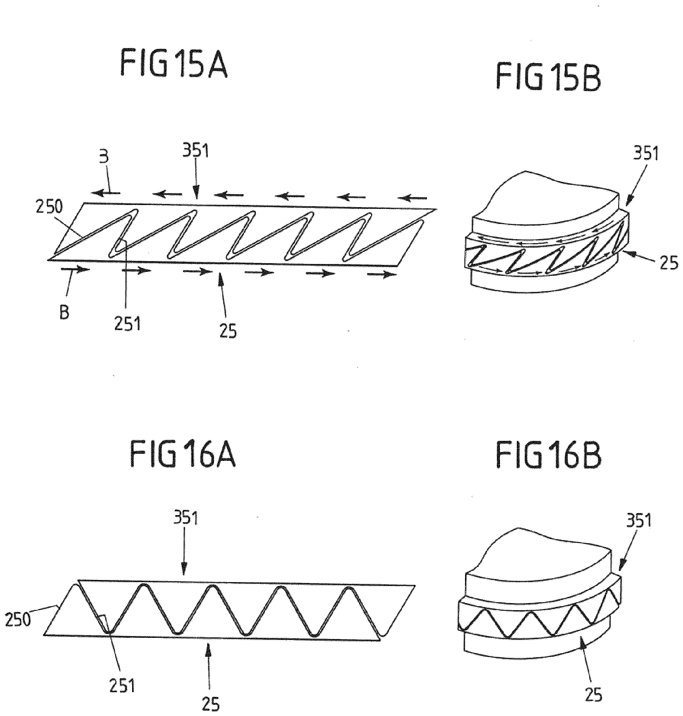

Bei dem Ausführungsbeispiel gemäß Fig. 1A, 1B bis 5A-5C sind die Verzahnungseinrichtungen 25, 351 mit Hinterschnitten ausgeführt derart, dass eine Bewegung des Wickelelements 35 entgegen der Wickelrichtung V in der Schließstellung gesperrt ist. Dies ist jedoch nur beispielhaft zu verstehen und kann grundsätzlich auch anders ausgeführt sein, wie dies nachfolgend anhand von Fig. 12A, 12B bis 16A, 16B erläutert werden soll.

Fig. 12A, 12B bis 16A, 16B zeigen unterschiedliche Ausführungsformen von Verzahnungseinrichtungen 25, 351, die sich in der Geometrie ihrer Zähne unterscheiden und bei einer Verschlussvorrichtung 1 der hier beschriebenen Art zum Einsatz kommen können.

So weisen bei dem Ausführungsbeispiel gemäß Fig. 12A, 12B die Zähne einer jeden Verzahnungseinrichtung 25, 351 eine schräg zur Schließrichtung X erstreckte Zahnflanke in Form einer Auflaufschräge 250 sowie eine näherungsweise senkrecht erstreckte Zahnflanke 251 mit einem daran ausgebildeten, entlang der Wickelrichtung V vorspringenden Vorsprungselement 252 auf. Bei einer der Wickelrichtung V entgegengesetzten Belastung in eine Belastungsrichtung B gelangen die Vorsprungselemente 252 der Zähne der Verzahnungseinrichtungen 25, 351 miteinander in Eingriff, sodass eine Bewegung der Verzahnungseinrichtungen 25, 351 in die Belastungsrichtung B (entgegen der Wickelrichtung V) gesperrt ist. Das Wickelelement 35 kann somit nicht in die Belastungsrichtung B entgegen der Wickelrichtung V zu dem ersten Verschlussteil 2 verdreht werden, wenn sich die Verschlussvorrichtung 1 in ihrer Schließstellung befindet.

Bei dem Ausführungsbeispiel gemäß Fig. 12A, 12B ist zusätzlich an dem Vorsprungselement 252 eines jeden Zahns (oder zumindest eines Teils der Zähne) der Verzahnungseinrichtung 351 eine Rastnase 253 ausgebildet, die zum Beispiel rastend mit einer zugehörigen Rastausnehmung an dem Vorsprungselement 252 eines zugeordneten Zahns der Verzahnungseinrichtung 25 in Eingriff gelangen kann, um den sperrenden Eingriff der Zähne der Verzahnungseinrichtungen 25, 351 bei Belastung in die Belastungsrichtung B zusätzlich zu sperren.

Das Ausführungsbeispiel gemäß Fig. 13A, 13B gleicht dem Ausführungsbeispiel gemäß Fig. 12A, 12B, abgesehen davon, dass bei dem Ausführungsbeispiel gemäß Fig. 13A, 13B an den Vorsprungselementen 252 der Zähne der Verzahnungseinrichtung 351 keine Rastnasen 253 wie bei dem Ausführungsbeispiel gemäß Fig. 12A, 12B vorgesehen sind.

Bei dem Ausführungsbeispiel gemäß Fig. 14A, 14B sind die Verzahnungseinrichtungen 25, 351 als Sägezahn-Verzahnungen ausgebildet. Die Zähne der Verzahnungseinrichtungen 25, 351 weisen hierbei jeweils eine Zahnflanke in Form einer Auflaufschräge 250 sowie eine senkrecht erstreckte Zahnflanke 251 auf. Eine Belastung der Verzahnungseinrichtungen 25, 351 in eine der Wickelrichtung V entgegengesetzte Belastungsrichtung B ist gesperrt.

Bei einem in Fig. 15A, 15B dargestellten Ausführungsbeispiel sind die Zähne der Verzahnungseinrichtungen 25, 351, im Vergleich zum Ausführungsbeispiel gemäß Fig. 14A, 14B, an den Zahnflanken 251 hinterschnitten, sind also schräg zur Schließrichtung X gestellt. Dies entspricht dem Ausführungsbeispiel gemäß Fig. 1A, 1B bis 5A-5C. Bei einer Belastung der Verzahnungseinrichtungen 25, 351 in eine der Wickelrichtung V entgegengesetzte Belastungsrichtung B sind die Verzahnungseinrichtungen 25, 351 zueinander gesperrt.

Bei den Ausführungsbeispielen gemäß Fig. 12A, 12B, 13A, 13B und 15A, 15B ist der Eingriff der Verzahnungseinrichtungen 25, 351 selbstverstärkend bei Belastung in die Belastungsrichtung B. Die Verschlussteile 2, 3 werden bei Belastung somit in die Schließrichtung X zueinander hin gezogen. Aufgrund des Formschlusses über die Vorsprungselemente 252 bzw. aufgrund des Hinterschnitts ist die Verschlussvorrichtung 1 zudem auch gegen ein Öffnen entgegen der Schließrichtung X gesperrt. Es können insbesondere auch Belastungskräfte aufgenommen und abgeleitet werden, die nicht rein tangential, sondern mit einer Komponente entgegen der Schließrichtung X wirken.

Bei dem Ausführungsbeispiel gemäß Fig. 16A, 16B sind die Zähne der Verzahnungseinrichtungen 25, 351 an beiden Zahnflanke 250, 251 so schräg gestellt, dass sie eine Auflaufschräge ausbilden und die Verzahnungseinrichtungen 25, 351, bei hinreichender Kraftwirkung zwischen den Verzahnungseinrichtungen 25, 351, in die Wickelrichtung V und auch entgegen der Wickelrichtung V übereinander gleiten können, bei axialem Ausweichen der Verzahnungseinrichtungen 25, 351 zueinander. Bei dem Ausführungsbeispiel gemäß Fig. 16A, 16B sind die Verzahnungseinrichtungen 25, 351 somit weder in die Wickelrichtung V noch entgegen der Wickelrichtung V zueinander gesperrt, sondern können ratschend übereinander gleiten, wenn das zwischen den Verzahnungseinrichtungen 25, 351 wirkende Drehmoment hinreichend groß ist.

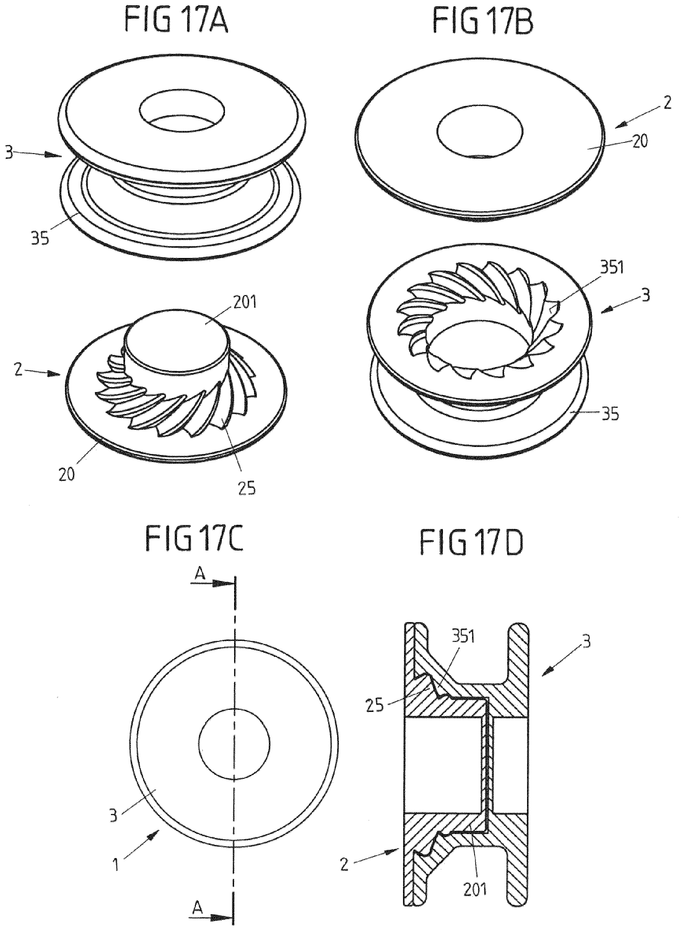

Bei einem in Fig. 17A-17D dargestellten Ausführungsbeispiel sind die Zähne der Verzahnungseinrichtungen 25, 351 wie bei einem Kegelzahnrad an ihren Zahnrücken schräg zur Wickelrichtung V und auch zur Schließrichtung X erstreckt, was die bei Belastung entgegen der Wickelrichtung V miteinander in Eingriff liegenden, zueinander abgestützten Flächen der Zähne der Verzahnungseinrichtungen 25, 351 vergrößern kann.

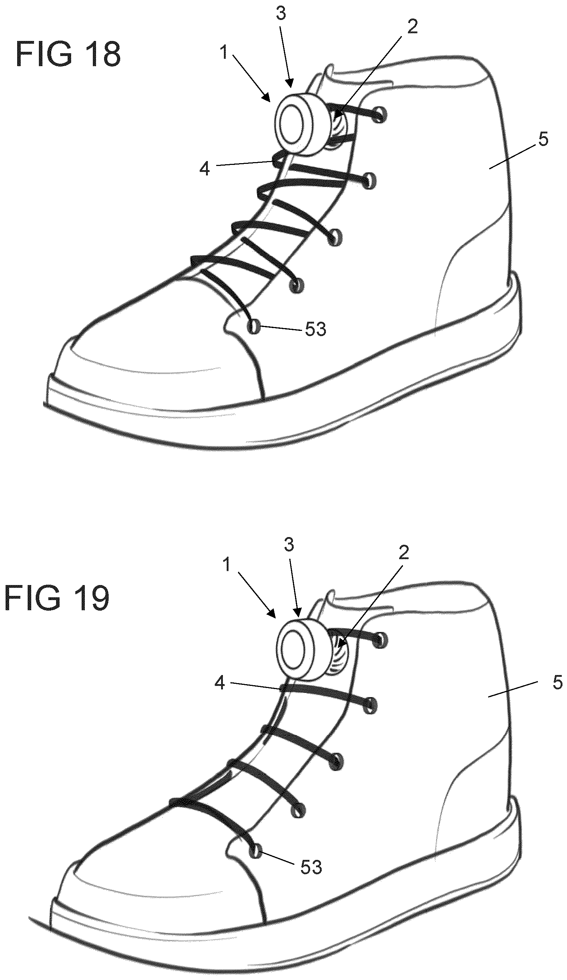

Fig. 18 bis 51 zeigen unterschiedliche Ausführungsbeispiele von Anwendungen einer Verschlussvorrichtung 1, die nach einem Ausführungsbeispiel der vorangehend beschriebenen Art ausgebildet sein kann.

Bei dem Ausführungsbeispiel gemäß Fig. 18 dient die Verschlussvorrichtung 1 zum Schließen und Spannen eines Schuhs 5. Das Verschlussteil 3 kann hierzu an das Verschlussteil 2 an einer Lasche des Schuhs 5 angesetzt werden, um ein Zugelement 4 in Form eines Schnürsenkels zu spannen.

Fig. 19 zeigt ein anderes Ausführungsbeispiel eines Schuhs 5, das sich in der Wicklung des Zugelements 4 in Form des Schnürsenkels von dem Ausführungsbeispiel gemäß Fig. 18 unterscheidet.

Bei dem Ausführungsbeispiel gemäß Fig. 18 und 19 ist ein Ende des Zugelements 4 in Form des Schnürsenkels an dem Verschlussteil 3 der Verschlussvorrichtung 1 festgelegt und kann durch Verdrehen des Betätigungselements 34 zusammen mit dem Wickelelement 35 relativ zu dem Verschlussteil 2 gespannt werden. Das Spannen ist hierbei auch händisch möglich, indem vor Festlegen des Verschlussteils 3 an dem Verschlussteil 2 an dem Verschlussteil 3 gezogen und das Zugelement 4 in Form des Schnürsenkels dadurch gespannt wird.

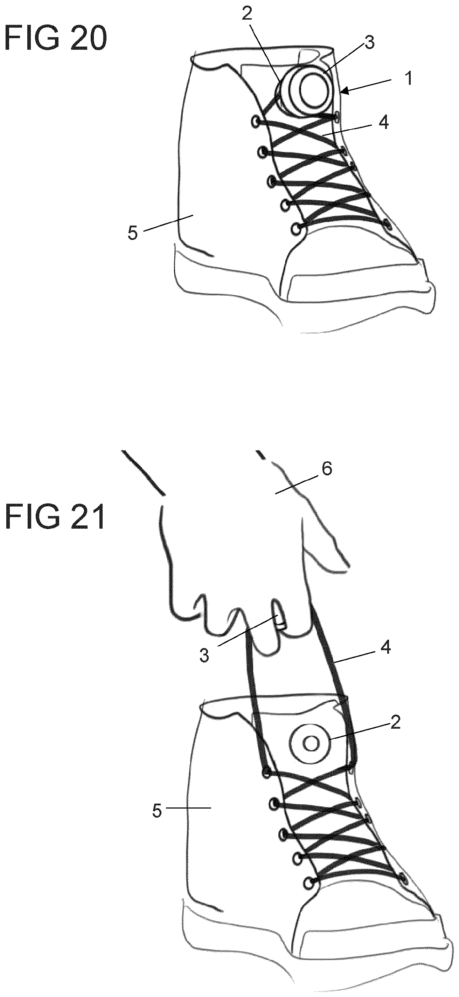

Bei dem Ausführungsbeispiel gemäß Fig. 20 und 21 sind zwei Enden des in diesem Fall als Schlaufe gewickelten Zugelements 4 in Form des Schnürsenkels mit dem Verschlussteil 3 der Verschlussvorrichtung 1 verbunden, sodass durch Verdrehen des Verschlussteils 3 relativ zum Verschlussteil 2 das Zugelement 4 in Form des Schnürsenkels mit zwei Enden aufgewickelt und somit gespannt werden kann. Wie in Fig. 21 dargestellt ist vor Anordnen des Verschlussteils 3 an dem Verschlussteil 2 ein händisches Spannen des Zugelements 4 durch Ziehen an dem Zugelement 4 mit einer Hand 6 möglich.

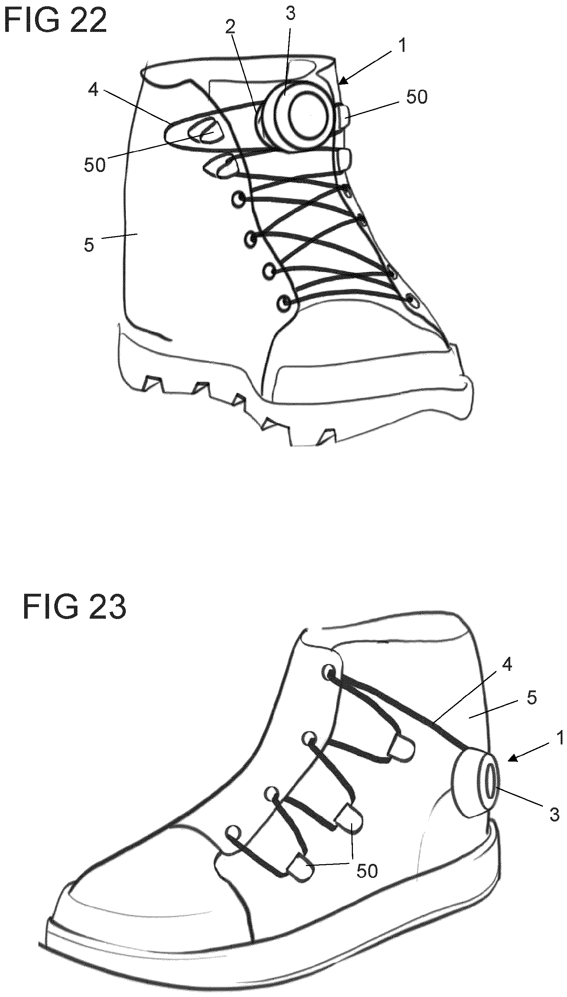

Bei dem Ausführungsbeispiel gemäß Fig. 22 sind wiederum zwei Enden des Zugelements 4 in Form des Schnürsenkels mit dem Verschlussteil 3 der Verschlussvorrichtung 1 verbunden und können somit durch Verdrehen des Verschlussteils 3 relativ zum Verschlussteils 2 zum Schließen und Spannen des Schuhs 5 aufgewickelt werden. Das Zugelement 4 in Form des Schnürsenkels ist hierbei um Spannelemente 50 herum verlegt, sodass der Schuh 5 durch Aufwickeln des Zugelements 4 auf das Wickelelement 35 des Verschlussteils 3 gespannt werden kann.

Fig. 23 zeigt ein anderes Ausführungsbeispiel, bei dem das Zugelement 4 um Spannelemente 50 herumverlegt und mit einem Ende an dem Verschlussteil 3 der Verschlussvorrichtung 1 angeordnet ist und somit über die Verschlussvorrichtung 1 gespannt werden kann.

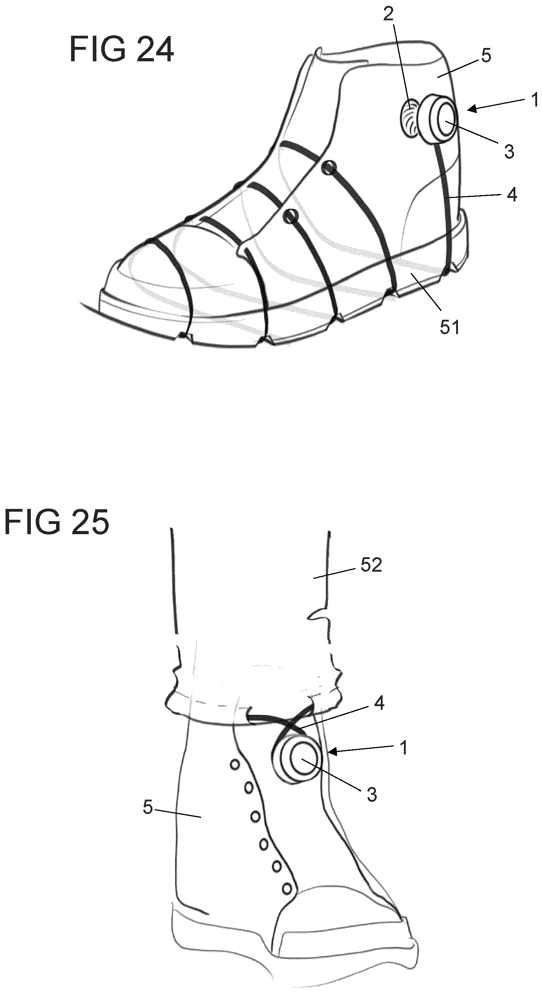

Bei dem Ausführungsbeispiel gemäß Fig. 24 ist das Zugelement 4 in Form des Schnürsenkels (auch) um die Sohle 51 des Schuhs 5 herum verlegt und mit einem Ende mit dem Verschlussteil 3 der Verschlussvorrichtung 1 verbunden, sodass der Schuh 5 über die Verschlussvorrichtung 1 geschlossen und gespannt werden kann.

Bei dem in Fig. 25 dargestellten Ausführungsbeispiel dient die Verschlussvorrichtung 1 zum Verspannen eines Hosenbeins 52 über ein Zugelement 4 in Form eines Bands mit einem Schuh 5. Das Zugelement 4 erstreckt sich hierzu um das Hosenbein 52 herum und ist über die Verschlussvorrichtung 1 an dem Schuh 5 festgelegt, sodass durch Verdrehen des Verschlussteils 3 gegenüber dem Verschlussteil 2 das Hosenbein 52 gegenüber dem Schuh 5 verspannt werden kann.

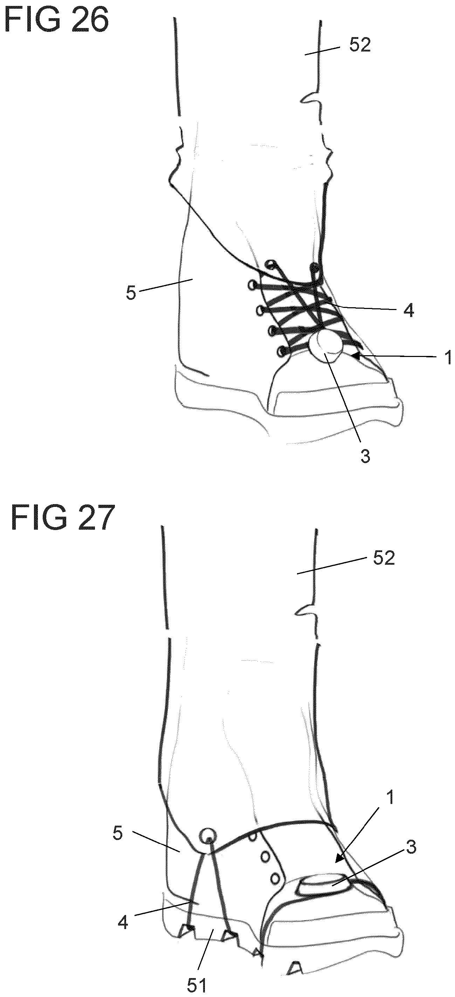

Ein anderes Ausführungsbeispiel zeigt Fig. 26. Bei diesem Ausführungsbeispiel kann ein Hosenbein 52 wiederum gegenüber einem Schuh verspannt werden, indem ein Zugelement 4, das sich durch Ösen im Hosenbein 52 hindurch erstreckt, über die Verschlussvorrichtung 1 gegenüber dem Schuh 5 verspannt werden kann.

Auch bei dem Ausführungsbeispiel gemäß Fig. 27 kann ein Hosenbein 52 gegenüber einem Schuh verspannt werden, wobei sich in diesem Fall das Zugelement 4 in Form eines Bands um die Sohle 51 des Schuhs 5 herum erstreckt und über die Verschlussvorrichtung 1 an dem Schuh 5 verspannt werden kann.

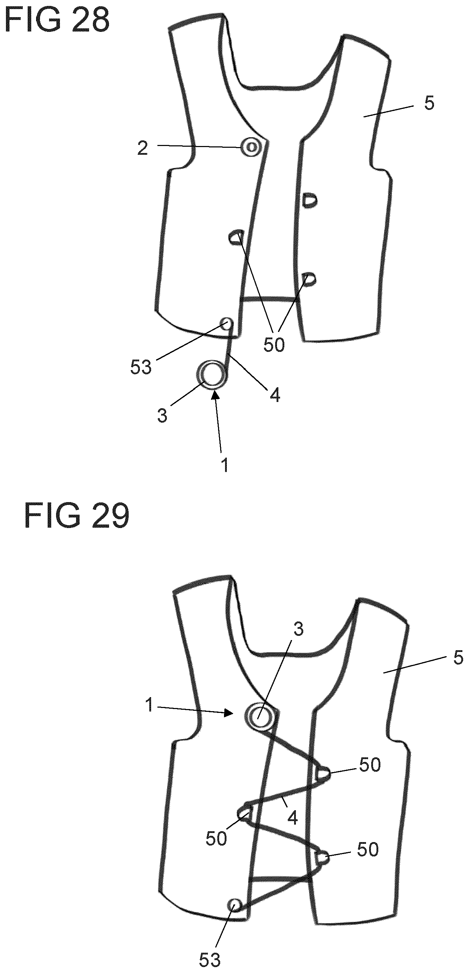

Bei dem Ausführungsbeispiel gemäß Fig. 28 und 29 dient die Verschlussvorrichtung 1 zum Schließen und Spannen eines Bekleidungsstücks 5, zum Beispiel einer Weste oder einer Jacke. Das Zugelement 4 in Form eines Bands oder eines Seils ist an einer Befestigungsstelle 53 an dem Bekleidungsstück 5 festgelegt und kann um Spannelemente 50 beidseits eines Öffnungsschlitzes des Bekleidungsstücks 5 herum verlegt werden, um auf diese Weise das Bekleidungsstück 5 zu schließen, wie dies in Fig. 29 dargestellt ist. Durch Anordnung des Verschlussteils 3 an dem Verschlussteil 2 und durch Verdrehen des Verschlussteils 3 relativ zum Verschlussteil 2 kann sodann das Bekleidungsstück 5 gespannt werden.

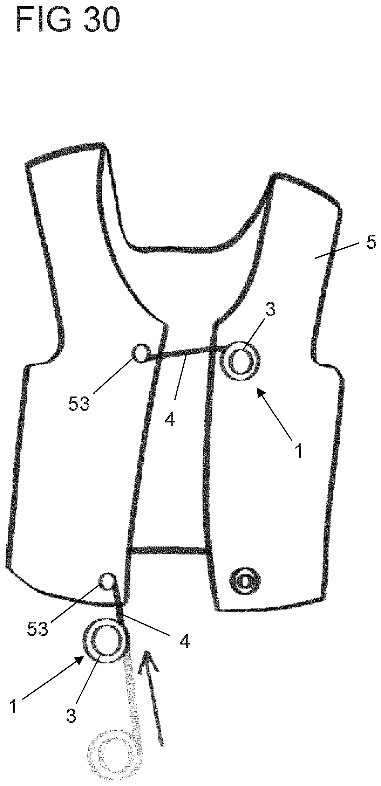

Auch bei dem Ausführungsbeispiel gemäß Fig. 30 dient die Verschlussvorrichtung 1 zum Verschließen eines Bekleidungsstücks 5, wobei in diesem Fall zwei Verschlussvorrichtungen 1 zum Spannen zweier Zugelemente 4 vorgesehen sind. Die Zugelemente 4 sind jeweils auf einer Seite des Öffnungsschlitzes des Bekleidungsstücks 5 an einer Befestigungsstelle 53 festgelegt und können durch Anordnung des jeweiligen Verschlussteils 3 an dem zugeordneten Verschlussteil 2 der Verschlussvorrichtung 1 auf der anderen Seite des Öffnungsschlitzes des Bekleidungsstücks 5 gespannt werden.

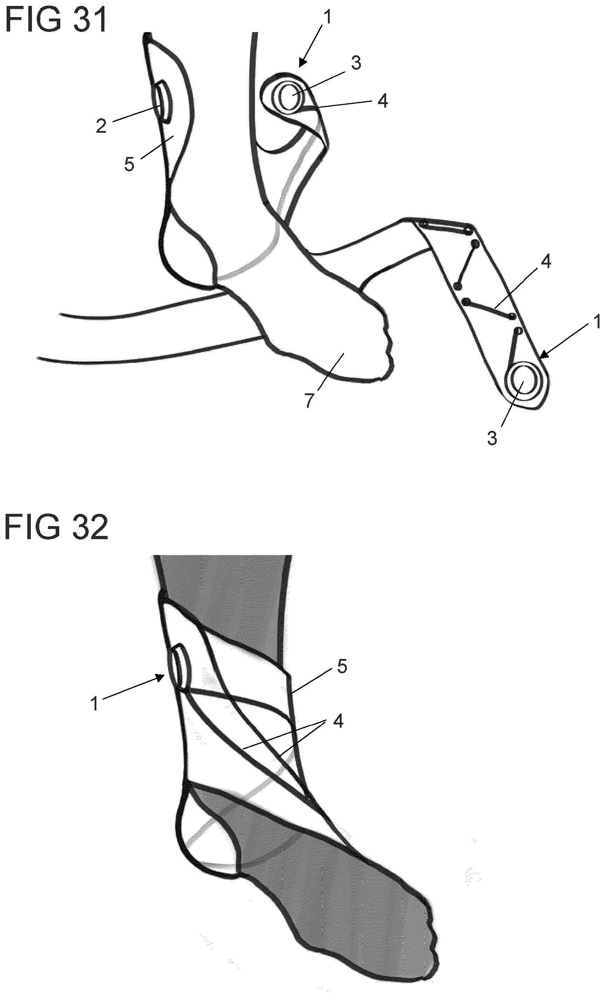

Bei dem Ausführungsbeispiel gemäß Fig. 31 und 32 dient die Verschlussvorrichtung 1 zum Schließen und Spannen eines medizinischen Hilfsmittels 5 in Form einer Knöchelbinde an einem Fuß 7. Durch Anordnen des mit einem Ende der Knöchelbinde verbundenen Verschlussteils 3 an dem mit einem anderen Ende der Knöchelbinde verbundenen Verschlussteil 2 und durch Spannen des an der Knöchelbinde erstreckten Zugelements 4 kann die Knöchelbinde geschlossen und gespannt werden.

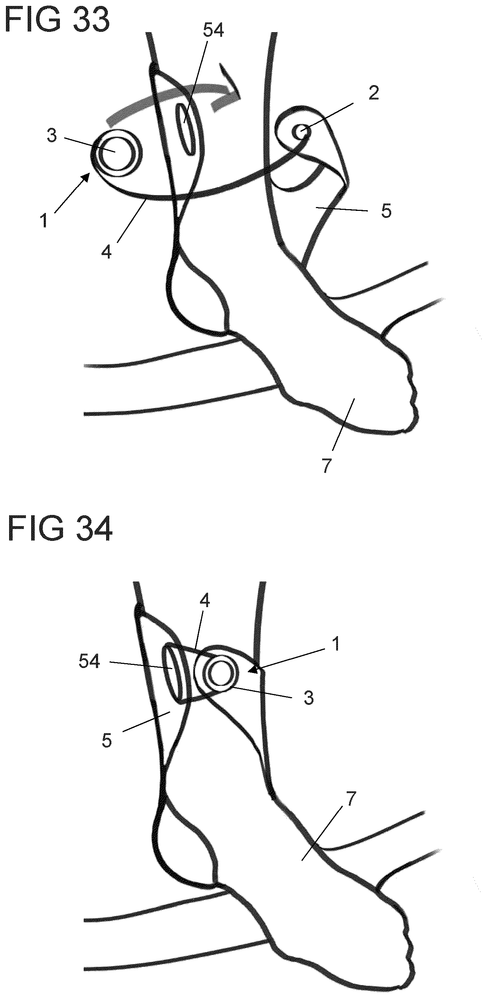

Fig. 33 und 34 zeigen ein anderes Ausführungsbeispiel eines medizinischen Hilfsmittels 5 in Form einer Knöchelbinde, bei der das an einem Ende mit dem Verschlussteil 2 und an einem anderen Ende mit dem Verschlussteil 3 verbundene Zugelement 4 um eine Umlenkung 54 herumverlegt werden kann und durch Ansetzen des Verschlussteils 3 an das Verschlussteil 2 somit eine Schlaufe des Zugelements 4 gebildet wird, die durch Verdrehen des Verschlussteils 3 zum Verschlussteil 2 zum Schließen und Spannen der Knöchelbinde verspannt werden kann.

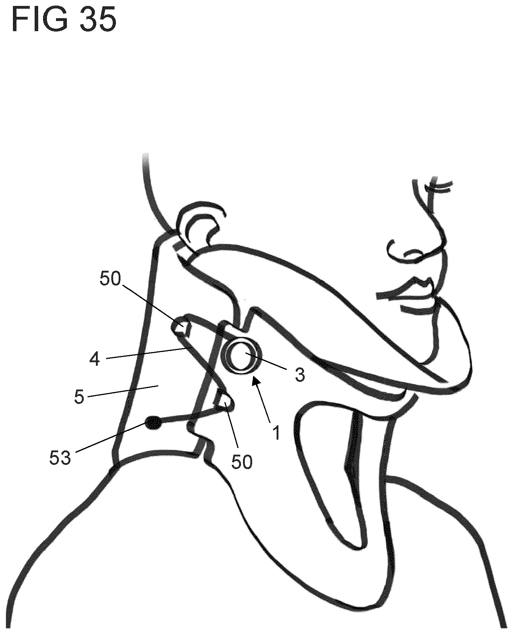

Fig. 35 zeigt ein Ausführungsbeispiel eines medizinischen Hilfsmittels 5 in Form einer als Halskrause ausgebildeten Orthese, bei der die Verschlussvorrichtung 1 zum Schließen und Spannen dient. Ein mit dem Verschlussteil 3 verbundenes Zugelement 4 kann, ausgehend von einer Befestigungsstelle 53, um Spannhaken 50 herumverlegt und durch Verdrehen des Verschlussteils 3 relativ zu dem Verschlussteil 2 gespannt werden.

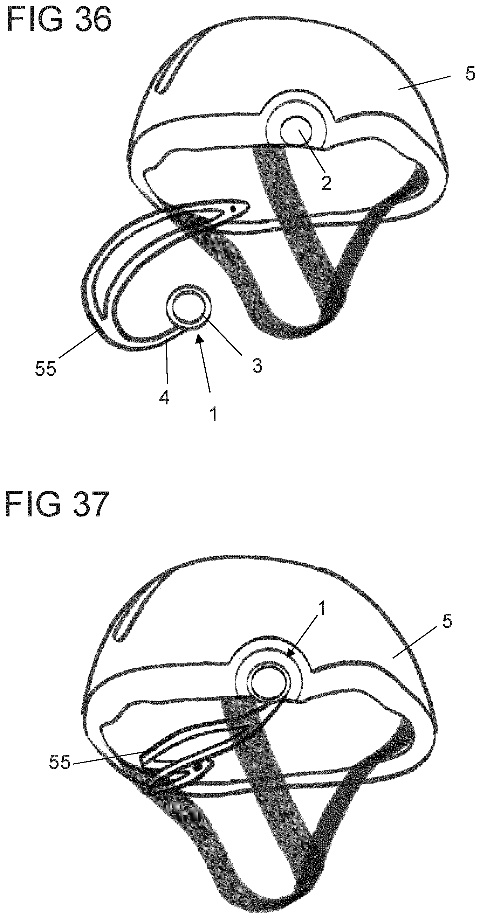

Fig. 36 und 37 zeigen ein Ausführungsbeispiel eines Helms 5, zum Beispiel eines Fahrradhelms, bei dem die Verschlussvorrichtung 1 zum Schließen und Spannen eines Riemens 55 dient. Das Zugelement 4 ist Bestandteil des Riemens 55 und kann auf das Verschlussteil 3, nämlich das Wickelelement 35 des Verschlussteils 3, aufgewickelt werden, um auf diese Weise den Riemen 55 zu spannen.

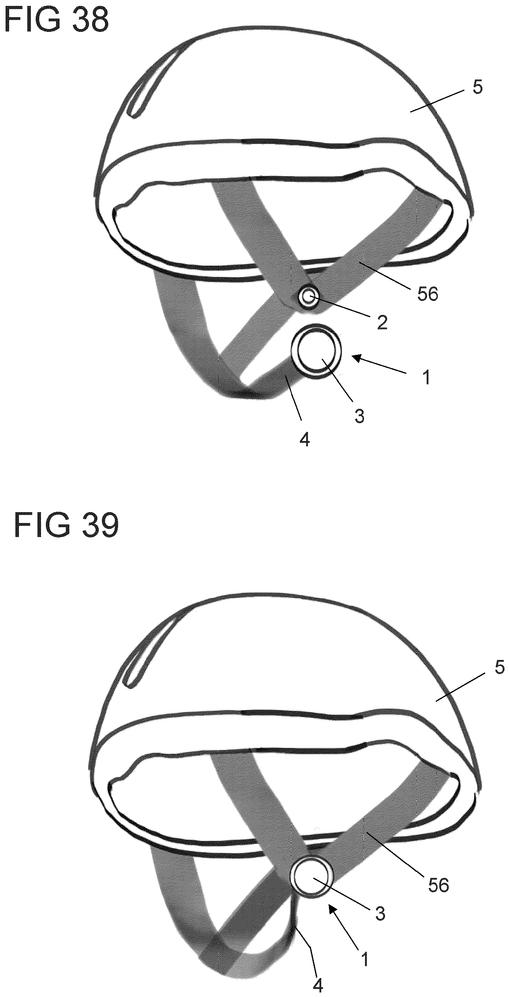

Bei dem Ausführungsbeispiel gemäß Fig. 38 und 39 dient die Verschlussvorrichtung 1 zum Spannen eines Kinngurts 56 eines Helms 5, zum Beispiel eines Fahrradhelms. Das Verschlussteil 3 der Verschlussvorrichtung 1 kann hierbei an dem Verschlussteil 2 angeordnet und zu dem Verschlussteil 2 verdreht werden, um auf diese Weise den Gurt 56 zu spannen.

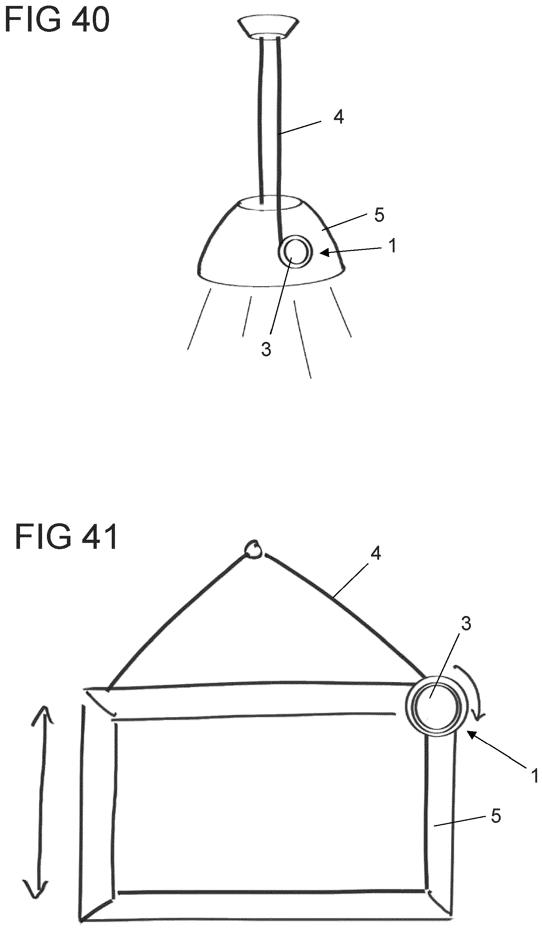

Beim Ausführungsbeispiel gemäß Fig. 40 dient die Verschlussvorrichtung 1 zum Höhenverstellen einer Baugruppe 5 in Form einer Lampe. Das Zugelement 4 dient hierbei zum Aufhängen der Lampe. Durch Verdrehen des Verschlussteils 3 der Verschlussvorrichtung 1 kann die Länge des Zugelements 4 verändert und dadurch die Höhe der Lampe eingestellt werden.

Bei dem Ausführungsbeispiel gemäß Fig. 41 dient die Verschlussvorrichtung 1 zum Aufhängen einer Baugruppe 5 in Form eines Bildes. Durch Verdrehen des Verschlussteils 3 kann die Länge des Zugelements 4 verändert und dadurch die Aufhängung des Bildes angepasst werden.

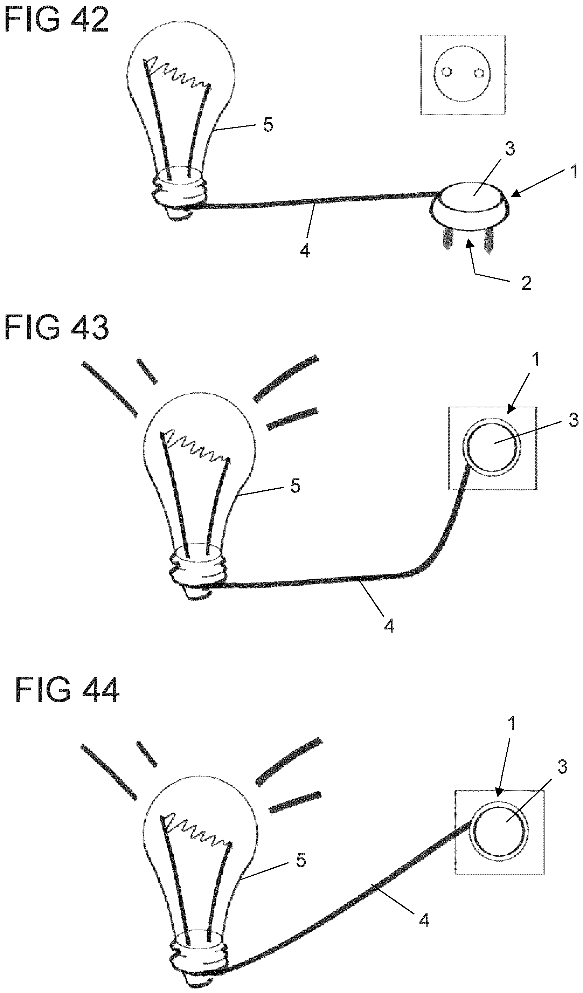

Bei dem in Fig. 42 bis 44 dargestellten Ausführungsbeispiel dient die Verschlussvorrichtung 1 zum elektrischen Anschließen einer Baugruppe in Form einer Lampe 5. Das Verschlussteil 2 ist hierzu als Stecker ausgebildet. Das Verschlussteil 3 kann zu dem Verschlussteil 2 in Form des Steckers verdreht werden, um auf diese Weise die frei erstreckte Länge des das Zugelement 4 verwirklichenden elektrischen Kabels zu verändern.

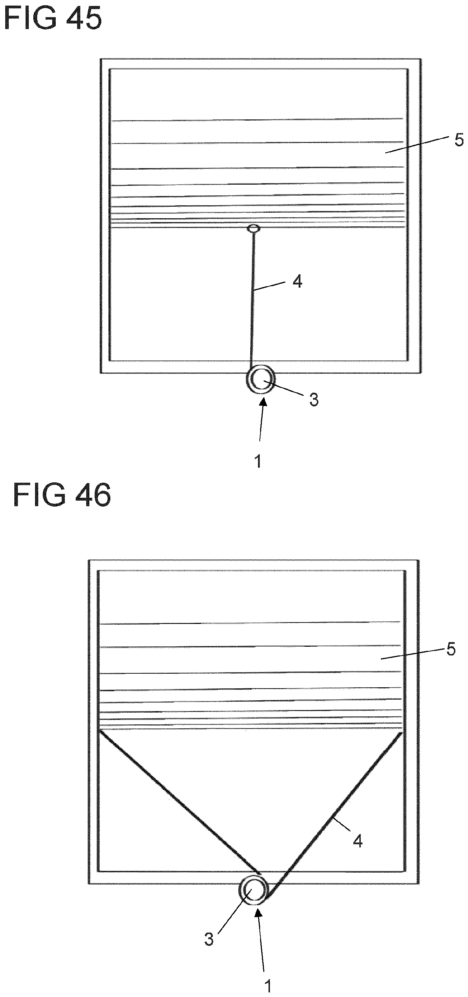

Bei dem Ausführungsbeispiel gemäß Fig. 45 dient die Verschlussvorrichtung 1 zum Spannen einer Baugruppe 5 in Form eines Rollos. Über das Zugelement 4 ist das Verschlussteil 3 mit dem Rollo verbunden. Durch Anordnen an dem zum Beispiel an einem Rahmen angeordneten Verschlussteil 2 und durch Verdrehen des Verschlussteils 3 kann das Zugelement 4 aufgewickelt und das Rollo somit verstellt werden.

Bei dem Ausführungsbeispiel gemäß Fig. 46 sind, im Unterschied zum Ausführungsbeispiel gemäß Fig. 45, zwei Enden des Zugelements 4 mit dem Verschlussteil 3 verbunden, sodass durch Verdrehen des Verschlussteils 3 die zwei Enden des Zugelements 4 gleichzeitig auf das Wickelelement 35 des Verschlussteils 3 aufgewickelt werden können.

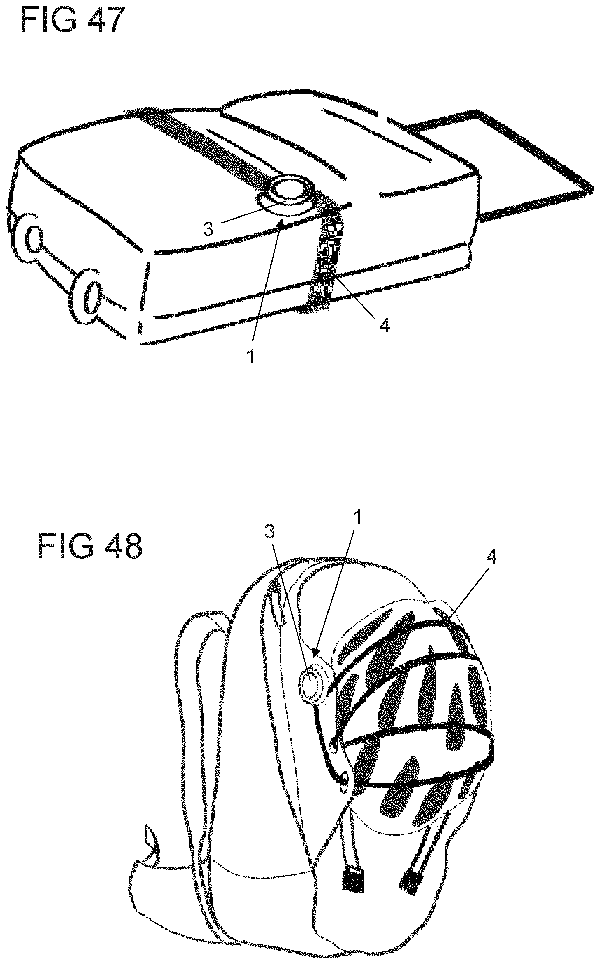

Bei einem in Fig. 47 dargestellten Ausführungsbeispiel dient die Verschlussvorrichtung 1 zum Spannen eines Zugelements 4 in Form eines Gurts an einem Gepäckstück.

Bei einem in Fig. 48 dargestellten Ausführungsbeispiel dient die Verschlussvorrichtung 1 zum Spannen eines Zugelements 4 in Form eines Bands oder eines Seils an einem Gepäckstück in Form eines Rucksacks, um auf diese Weise Gegenstände an dem Gepäckstück zu befestigen.

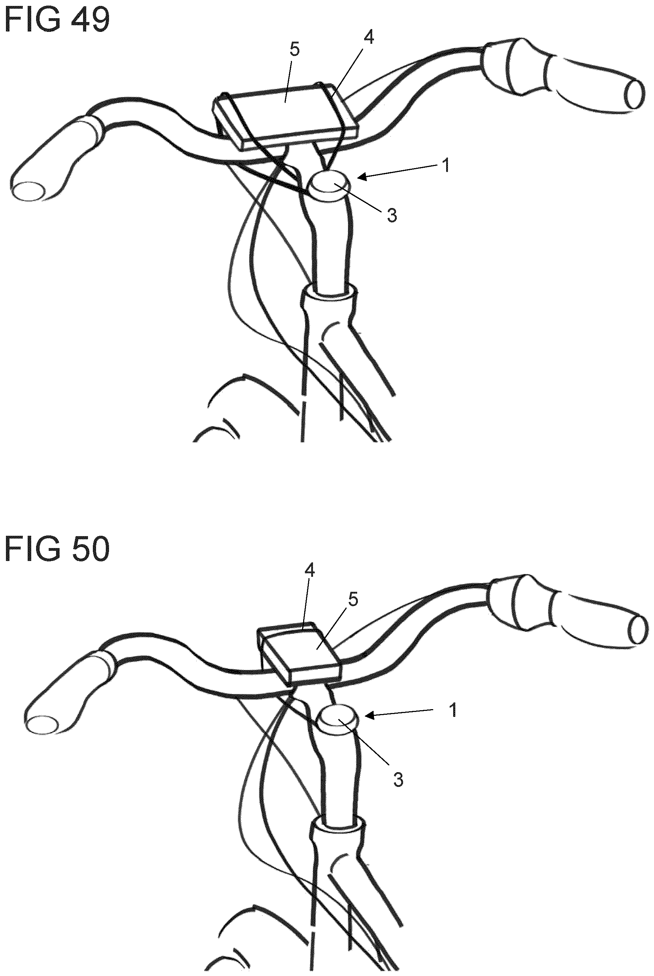

Bei einem in Fig. 49 dargestellten Ausführungsbeispiel dient die Verschlussvorrichtung 1 zum Befestigen eines Gegenstands 5, zum Beispiel eines Mobiltelefons oder dergleichen, an einem Fahrrad, insbesondere einem Lenker eines Fahrrads. Das Zugelement 4 ist hierbei um den Gegenstand 5 herumgeschlungen und kann durch abschnittweises Aufwickeln auf das Wickelelement 35 des Verschlussteils 3 gespannt werden.

Fig. 50 zeigt ein anderes Ausführungsbeispiel mit anderer Wicklung des Zugelements 4 zum Befestigen eines Gegenstands 5, zum Beispiel eines Mobiltelefons, an einem Fahrrad.

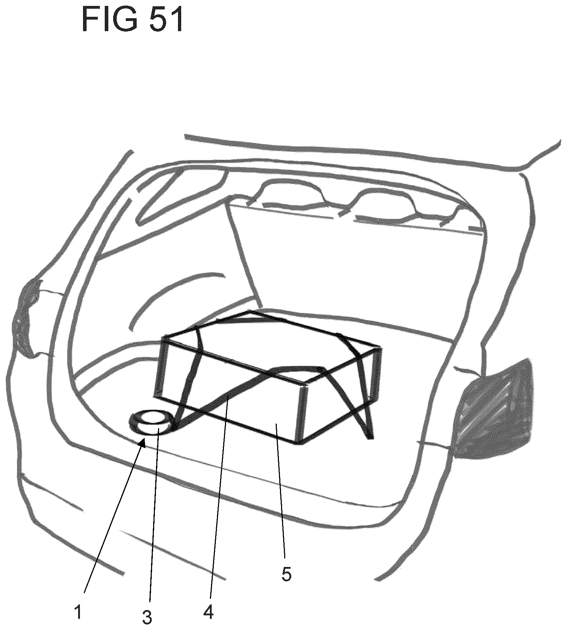

Bei einem in Fig. 51 dargestellten Ausführungsbeispiel dient die Verschlussvorrichtung 1 zum Befestigen eines Gegenstands, zum Beispiel eines Gepäckstücks, in einem Laderaum eines Fahrzeugs. Das Zugelement 4 ist hierbei über das Gepäckstück hinweg verlegt und hält auf diese Weise das Gepäckstück ortsfest am Boden des Laderaums. Über die Verschlussvorrichtung 1 kann das Zugelement 4 zum Befestigen des Gepäckstücks gespannt werden.

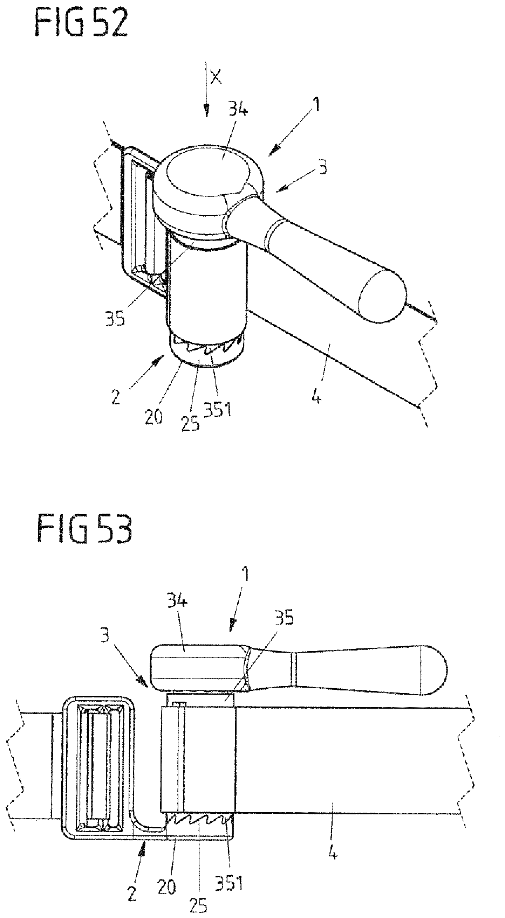

Fig. 52 bis 56 zeigen ein weiteres Ausführungsbeispiel einer Verschlussvorrichtung 1, bei der Verschlussteile 2, 3 entlang einer Schließrichtung X aneinander angesetzt werden können und in einer Schließstellung aneinandergehalten sind.

Bei dem Ausführungsbeispiel gemäß Fig. 52 bis 56 ist das Zugelement 4 als Gurt ausgebildet, der auf ein Wickelelement 35 in Form einer Hülse des Verschlussteils 3 aufgewickelt werden kann. Das Verschlussteil 3 kann an das Verschlussteile 2 angesetzt werden, das beispielsweise eine Gurtschnalle aufweist, sodass über die Verschlussvorrichtung 1 Enden des Zugelements 4 miteinander verbunden und zueinander gespannt werden können.

Das Verschlussteil 3 weist ein Betätigungselement 34 mit einem daran angeformten Handhebel auf, der über eine Eingriffseinrichtung 345 mit einer Eingriffseinrichtung 355 des Wickelelements 35 in Eingriff gebracht werden kann, sodass über das Betätigungselement 34 das Wickelelement 35 in eine Wickelrichtung V gegenüber dem Verschlussteil 2 verdreht werden kann.

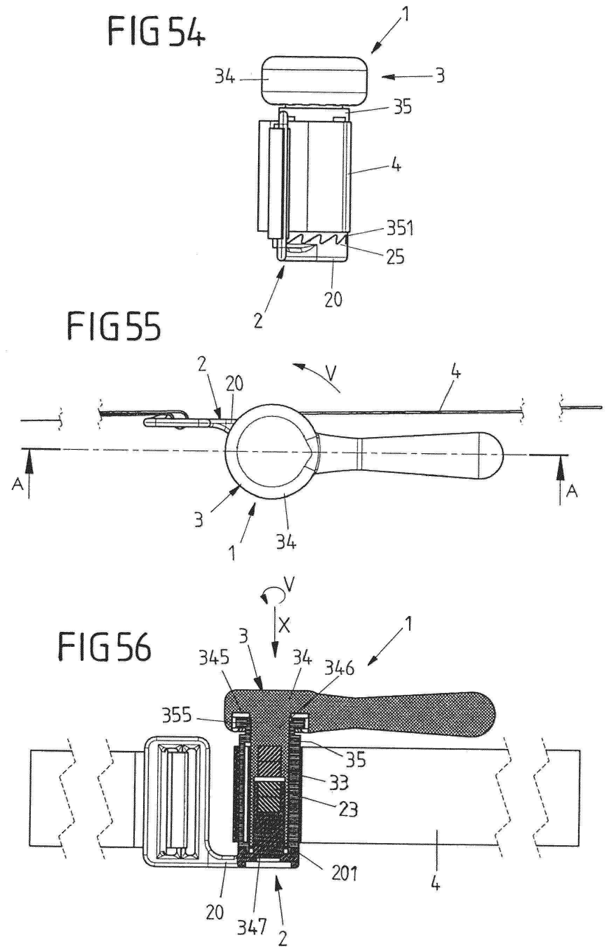

Wie insbesondere aus der Schnittansicht gemäß Fig. 56 ersichtlich, weist das Betätigungselement 34 einen Zapfen 346 mit einer Eingriffsöffnung 347 auf, mit dem das Betätigungselement 34 in die Schließrichtung X auf einen Zylinderabschnitt 201 an einem Körper 20 des Verschlussteils 2 aufgesetzt werden kann, um die Verschlussteile 2, 3 miteinander zu verbinden.

Beispielsweise aufgrund einer Federvorspannung zwischen dem Betätigungselement 34 und dem Wickelelement 35 sind die Eingriffseinrichtungen 345, 355 nicht miteinander in Eingriff, wenn die Verschlussteile 2, 3 voneinander getrennt sind. Das Wickelelement 35 kann somit frei gegenüber dem Betätigungselement 34 verdreht werden, sodass das Zugelement 4 beispielsweise von dem Wickelelement 35 abgewickelt werden kann. Zum Schließen wird das Verschlussteil 3 derart an das Verschlussteil 3 angesetzt, dass die Eingriffsöffnung 347 an dem Zapfen 346 des Betätigungselements 34 mit dem Zylinderabschnitt 201 des Verschlussteils 2 in Eingriff gelangt, wobei das Wickelelement 35 an dem Körper 20 des Verschlussteils 2 abgestützt wird und aufgrund einer magnetischen Anziehung von Magnetelementen 23, 33 an dem Zylinderabschnitt 201 einerseits und dem Zapfen 346 des Betätigungselements 34 andererseits (siehe Fig. 56) das Betätigungselement 34 hin zu dem Wickelelement 35 gezogen und dadurch die Eingriffseinrichtungen 345, 355 formschlüssig miteinander in Eingriff gelangen. Auf diese Weise wird eine Wirkverbindung zwischen dem Betätigungselement 34 und dem Wickelelement 35 hergestellt, sodass bei miteinander verbundenen Verschlussteilen 2, 3 das Betätigungselement 34 und das Wickelelement 35 gemeinsam verdreht werden können, um auf diese Weise das Zugelement 4 auf das Wickelelement 35 aufzuwickeln und dadurch das Zugelement 4 zu spannen.

An einem dem Körper 20 zugewandten Ende weist das Wickelelement 35 eine Verzahnungseinrichtung 351 in Form einer sägezahnförmigen Verzahnung auf, die bei miteinander verbundenen Verschlussteilen 2, 3 mit einer Verzahnungseinrichtung 25 an dem Körper 20 in Eingriff steht. Der Eingriff der Verzahnungseinrichtungen 25, 351 bewirkt, dass die Verschlussteile 2, 3 in die Wickelrichtung V zueinander verdreht werden können, um das Zugelement 4 an dem Wickelelement 35 zu spannen, nicht aber entgegen der Wickelrichtung V.

Zum Lösen der Verschlussvorrichtung 1 können die Verschlussteile 2, 3 entgegen der Schließrichtung X voneinander abgezogen werden, sodass auf diese Weise die Verschlussteile 2, 3 voneinander getrennt werden.

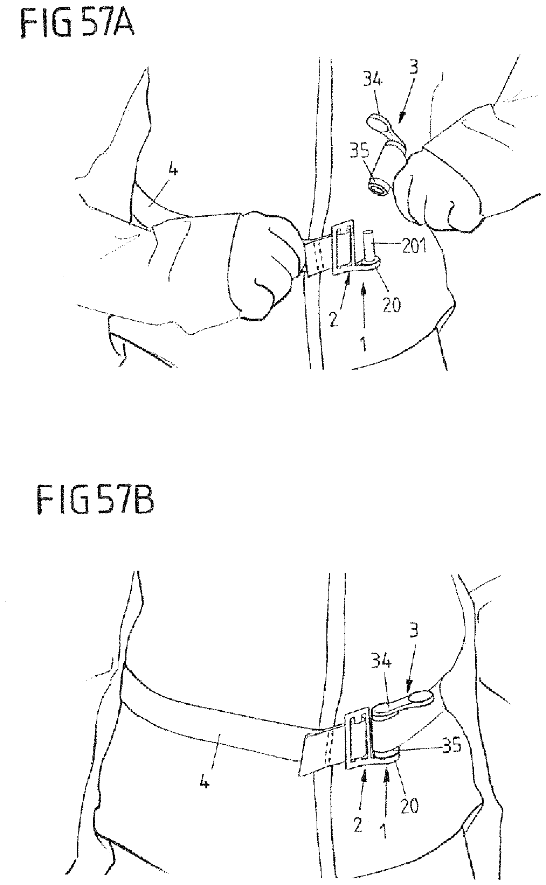

Fig. 57A und 57B zeigen die Verschlussvorrichtung 1 bei getrennten Verschlussteilen 2, 3 (Fig. 57A) und bei geschlossener Verschlussvorrichtung 1 (Fig. 57B). Die Verschlussvorrichtung 1 kann beispielsweise zum Spannen eines Gurts in Form eines Gürtels dienen.

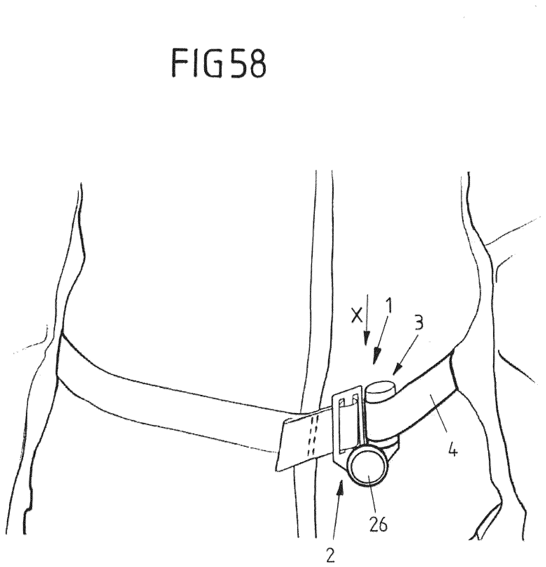

Fig. 58 ein weiteres Ausführungsbeispiel einer Verschlussvorrichtung 1, bei der Verschlussteile 2, 3 in eine Schließrichtung X aneinander angesetzt werden können, analog wie dies vorangehend beschrieben worden ist.

Bei dem Ausführungsbeispiel gemäß Fig. 58 ist ein Getriebe 26 an dem Verschlussteil 2 vorgesehen, das beispielsweise die Gestalt eines Kegelgetriebes oder Schneckengetriebes aufweisen kann und dazu dient, über die Verzahnungseinrichtung 25 (die bei miteinander verbundenen Verschlussteilen 2, 3 mit der Verzahnungseinrichtung 351 des Verschlussteils 3 in Eingriff steht, wie dies zum Beispiel aus Fig. 52 ersichtlich ist) das Verschlussteil 3 relativ zum Verschlussteil 2 zu verdrehen, um auf diese Weise das Zugelement 4 zu spannen. Bei dem Ausführungsbeispiel gemäß Fig. 58 erfolgt ein Verdrehen der Verschlussteile 2, 3 zueinander somit über ein an dem Verschlussteil 2 vorgesehenes Getriebe, das zum Beispiel händisch betätigt werden kann.

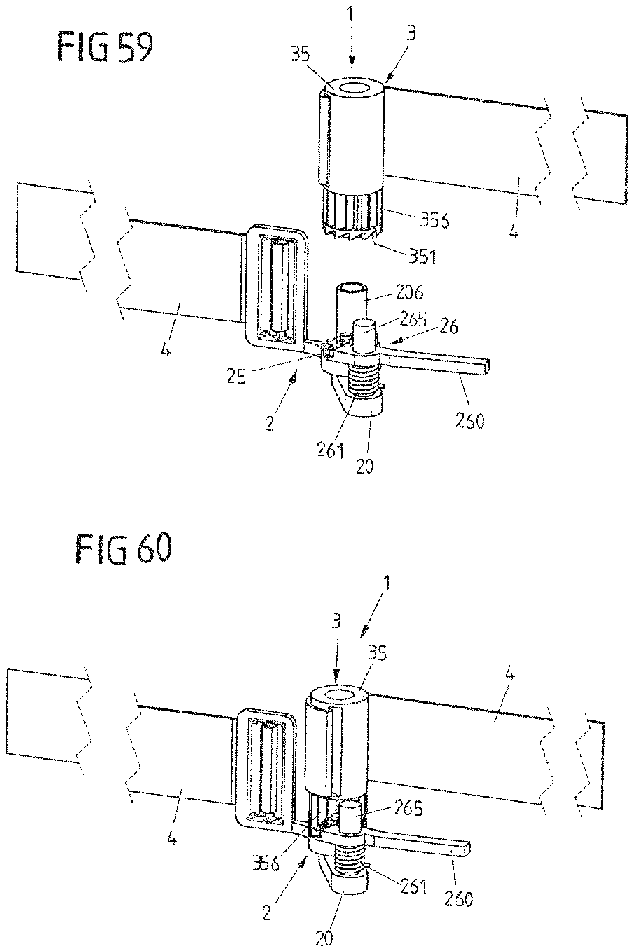

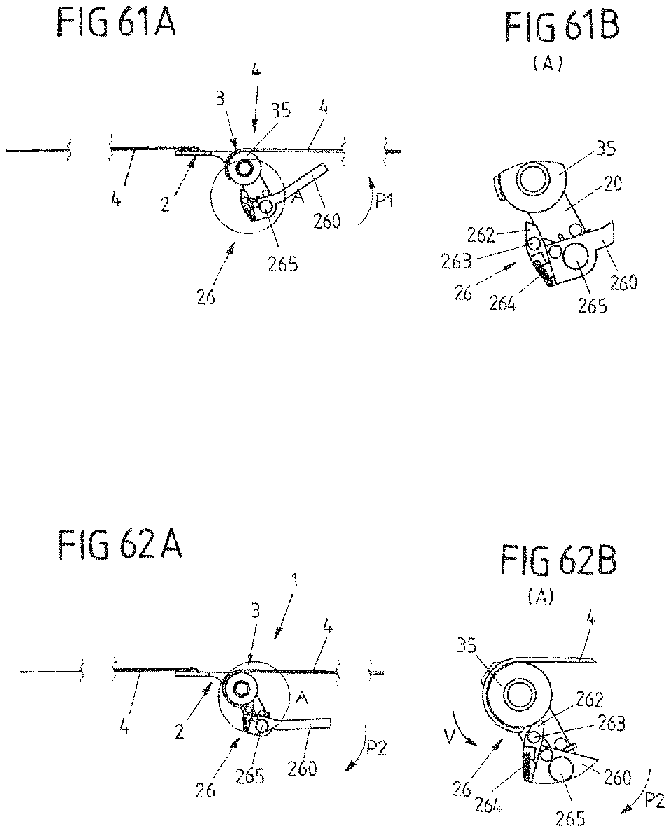

Fig. 59 bis 62A, 62B zeigen ein weiteres Ausführungsbeispiel, bei dem eben ein solches Getriebe 26 zum Spannen des Wickelelements 35 umgesetzt ist.

Das Getriebe 26 ist bei dem Ausführungsbeispiel gemäß Fig. 59 bis 62A, 62B als Spanngetriebe ausgebildet, bei dem ein Spannhebel 260 um eine Schwenkachse 265 verschwenkbar an dem Körper 20 des Verschlussteils 2 gelagert und über ein Federelement 261 gegenüber dem Körper 20 in eine Grundstellung (dargestellt in Fig. 62A, 62B) vorgespannt ist.

Bei dem Ausführungsbeispiel kann das Verschlussteil 3 mit einem Wickelelement 35 auf einen Zylinderabschnitt 201 des Körpers 20 aufgesetzt werden und gelangt, in verbundener Stellung, über eine Verzahnungseinrichtung 351 mit einer zugeordneten Verzahnungseinrichtung 25 des Körpers 20 in Eingriff, wie dies auch vorangehend beschrieben worden ist. An dem Wickelelement 35 ist ein Spanneingriff 356 in Form einer Verzahnung ausgebildet, die um das Wickelelement 35 umläuft und zum Wechselwirken mit dem Getriebe 26 dient.

An dem Spannhebel 260 des Getriebes 26 ist, um eine Schwenkachse 263 schwenkbar, ein Eingriffshebel 262 angeordnet, der zum Eingriff in den Spanneingriff 356 des Wickelelements 35 dient.

Zum Ansetzen der Verschlussteile 2, 3 aneinander kann der Spannhebel 260, wie dies in Fig. 61A, 61B dargestellt ist, aus der Grundstellung in eine Schwenkrichtung P1 ausgelenkt werden, um auf diese Weise den Eingriffshebel 262 aus einem Bereich zu entfernen, den das Wickelelement 35 bei miteinander verbundenen Verschlussteilen 2, 3 einnimmt. Die Verschlussteile 2, 3 können somit ohne weiteres, ohne Behinderung durch das Getriebe 26, aneinander angesetzt werden.

Wird der Spannhebel 260 wieder losgelassen, gelangt das Getriebe 26 mit seinem Spannhebel 260 in die Grundstellung gemäß Fig. 62A, 62B, in der der Eingriffshebel 262 mit dem Spanneingriff 256 in Eingriff steht.

Wird nunmehr der Spannhebel 260 in eine Schwenkrichtung P2 ausgelenkt, so wird der Eingriffshebel 262 mitbewegt und verdreht das Wickelelement 35 in die Wickelrichtung V, sodass das Zugelement 4 auf das Wickelelement 35 aufgewickelt wird. Das Zugelement 4 wird somit gespannt.

Das Spannen erfolgt hierbei schrittweise. Aufgrund des Federelements 261 und der dadurch bereitgestellten Federvorspannung wird der Spannhebel 260 nach einer Betätigung selbsttätig in die Grundstellung zurückgestellt, wobei der Eingriffshebel 262 über den Spanneingriff 356 hinweg begleitet, unter elastischer Auslenkung des Federelements 264, über das der Eingriffshebel 262 zu dem Spannhebel 260 elastisch vorgespannt ist. Das Spannen des Zugelements 4 erfolgt somit schrittweise durch wiederholte Betätigung des Spannhebels 260.

Über das Federelement 264 wird auch ein Freilauf bereitgestellt. Das Wickelelement 35 kann auch per Hand in die Wickelrichtung V verdreht werden. Hierbei gleitet der Eingriff 262 unter elastischer Auslenkung des Federelements 264 über den Spanneingriff 356 des Wickelelements 35.

Eine Verschlussvorrichtung der hier beschriebenen Art kann in ganz unterschiedlichen Anwendungen Verwendung finden. Bei einer Verschlussvorrichtung der beschriebenen Art wird hierbei eine Spannvorrichtung mit voneinander trennbaren Verschlussteilen kombiniert, was ein Verbinden von Baugruppen unter gleichzeitiger Spannung der Baugruppen zueinander ermöglicht.

### Bezugszeichenliste

- 1: Verschlussvorrichtung
- 2: Verschlussteil
- 20: Grundkörper
- 200: Öffnung
- 201: Zylinderabschnitt
- 202: Rasteingriff (Rastnut)
- 23: Magnetelement
- 25: Verzahnungseinrichtung
- 250: Auflaufschräge
- 251: Zahnflanke
- 252: Vorsprungselement
- 253: Rastnase
- 26: Getriebeeinrichtung
- 260: Spannhebel
- 261: Federelement
- 262: Eingriffshebel
- 263: Schwenkachse
- 264: Federelement
- 265: Schwenkachse
- 3: Verschlussteil
- 32: Deckelelement
- 320: Körper
- 321: Öffnung
- 322: Aufnahmeraum
- 33: Magnetelement
- 34: Betätigungselement
- 340: Basisfläche
- 341: Zylindervorsprung
- 342: Halteelement
- 343: Federelement
- 344: Seitenwandung
- 345: Eingriffseinrichtung
- 346: Zapfen
- 347: Öffnung
- 35: Wickelelement
- 350: Öffnung
- 351: Verzahnungseinrichtung
- 352: Ringbund
- 353: Rille
- 354: Ringbund
- 355: Eingriffseinrichtung
- 356: Spanneingriff
- 36: Rasteinrichtung
- 37: Bedienelement
- 370: Körper
- 371: Ringbund
- 372: Entsperröffnung
- 373: Öffnung
- 374: Federelement
- 38: Eingriffselement
- 380: Körper
- 381: Ringbund
- 382: Aufnahmeöffnung
- 383: Öffnung
- 384: Federelement
- 385: Rastelement
- 386: Federelement
- 387: Öffnung
- 4: Zugelement
- 5: Baugruppe
- 50: Spannhaken
- 51: Sohle
- 52: Hosenbein
- 53: Befestigungsstelle
- 54: Umlenkung
- 55: Riemen
- 56: Gurt
- 6: Hand
- 7: Fuß
- B: Belastungsrichtung
- D: Betätigungsrichtung
- L: Löserichtung
- P1, P2: Schwenkrichtung
- V: Wickelrichtung
- X: Schließrichtung

## Patentansprüche

1. Verschlussvorrichtung (1) zum lösbaren Verbinden zweiter Teile, mit einem ersten Verschlussteil (2) und einem zweiten Verschlussteil (3), die entlang einer Schließrichtung (X) aneinander ansetzbar, in einer Schließstellung aneinander gehalten und zum Öffnen der Verschlussvorrichtung (1) durch Trennen des ersten Verschlussteils (2) und des zweiten Verschlussteils (3) voneinander lösbar sind,
wobei das zweite Verschlussteil (3) ein Betätigungselement (34) mit einer ersten Eingriffseinrichtung (345) und ein an dem Betätigungselement (34) angeordnetes, zum Aufwickeln eines Zugelements (4) in eine Wickelrichtung (V) verdrehbares Wickelelement (35) mit einer zweiten Eingriffseinrichtung (355) aufweisen, wobei die erste Eingriffseinrichtung (345) und die zweite Eingriffseinrichtung (355) in einer Lösestellung nicht miteinander in Eingriff stehen, sodass das Wickelelement (35) relativ zu dem Betätigungselement (34) verdrehbar ist, und miteinander in Eingriff bringbar sind, sodass in einer Eingriffsstellung das Wickelelement (35) über das Betätigungselement (34) verdrehbar ist, wobei das erste Verschlussteil (2) eine erste Verzahnungseinrichtung (25) und das zweite Verschlussteil (3) eine zweite Verzahnungseinrichtung (351) aufweisen und die erste Verzahnungseinrichtung (25) und die zweite Verzahnungseinrichtung (351) in der Schließstellung der Verschlussvorrichtung (1) miteinander ein Eingriff stehen derart, dass das erste Verschlussteil (2) und das zweite Verschlussteil (3) entlang der Wickelrichtung (V) formschlüssig zueinander gehalten sind,
wobei das erste Verschlussteil (2) und das zweite Verschlussteil (3) in der Schließstellung zum Halten der Verschlussteile (2, 3) entgegen der Schließrichtung (X) aneinander mechanisch miteinander verrastet sind,
wobei das erste Verschlussteil (2) und das zweite Verschlussteil (3) jeweils zumindest ein Magnetelement (23, 33) zum Bereitstellen einer magnetischen Anziehungskraft beim Ansetzen der Verschlussteile (2, 3) aneinander aufweisen.

2. Verschlussvorrichtung (1) nach Anspruch 1, **dadurch gekennzeichnet, dass** in der Schließstellung der Verschlussvorrichtung (1) die erste Eingriffseinrichtung (345) und die zweite Eingriffseinrichtung (355) in der Eingriffsstellung sind.

3. Verschlussvorrichtung (1) nach Anspruch 1 oder 2, **dadurch gekennzeichnet, dass** in der Eingriffsstellung der ersten Eingriffseinrichtung (345) und der zweiten Eingriffseinrichtung (355) bei einem Verdrehen des Betätigungselements (34) in die Wickelrichtung (V) das Wickelelement (35) zusammen mit dem Betätigungselement (34) in die Wickelrichtung (V) bewegt wird, das Betätigungselement (34) jedoch entgegen der Wickelrichtung (V) relativ zu dem Wickelelement (V) verdrehbar ist.

4. Verschlussvorrichtung (1) nach einem der Ansprüche 1 bis 3, **dadurch gekennzeichnet, dass** die erste Eingriffseinrichtung (345) und/oder die zweite Eingriffseinrichtung (355) eine um die Schließrichtung (X) erstreckte sägezahnförmige Verzahnung aufweisen.

5. Verschlussvorrichtung (1) nach einem der vorangehenden Ansprüche, **dadurch gekennzeichnet, dass** das Betätigungselement (34) und das Wickelelement (35) zum Bewegen der Eingriffseinrichtungen (345, 355) zwischen der Lösestellung und der Eingriffsstellung axial entlang der Schließrichtung (X) zueinander verstellbar sind.

6. Verschlussvorrichtung (1) nach einem der vorangehenden Ansprüche, **dadurch gekennzeichnet, dass** das Betätigungselement (34) und das Wickelelement (35) in Richtung der Lösestellung zueinander federvorgespannt sind.

7. Verschlussvorrichtung (1) nach einem der vorangehenden Ansprüche, **dadurch gekennzeichnet, dass** die zweite Verzahnungseinrichtung (351) an dem Betätigungselement (34) oder dem Wickelelement (35) angeordnet ist.

8. Verschlussvorrichtung (1) nach einem der vorangehenden Ansprüche, **dadurch gekennzeichnet, dass** das zweite Verschlussteil (3) in der Schließstellung zu dem ersten Verschlussteil (2) in die Wickelrichtung (V) verdrehbar ist, ein Verdrehen des zweiten Verschlussteils (3) zu dem ersten Verschlussteil (2) entgegen der Wickelrichtung (V) jedoch gesperrt ist.

9. Verschlussvorrichtung (1) nach einem der vorangehenden Ansprüche, **dadurch gekennzeichnet, dass** das erste Verschlussteil (2) einen Zylinderabschnitt (201) aufweist, der in der Schließstellung in eine Öffnung (350) des Wickelelements (35) zum drehbaren Lagern des Wickelelements (35) an dem ersten Verschlussteil (2) eingreift.

10. Verschlussvorrichtung (1) nach einem der vorangehenden Ansprüche, **dadurch gekennzeichnet, dass** eines der Verschlussteile (2, 3) eine Rasteinrichtung (36) mit zumindest einem beweglichen Rastelement (385) aufweist, das in einer verrasteten Stellung in einen Rasteingriff (202) des anderen Verschlussteils (3, 2) eingreift und dadurch die Verschlussteile (2, 3) entgegen der Schließrichtung (X) aneinander hält.

11. Verschlussvorrichtung (1) nach Anspruch 10, **dadurch gekennzeichnet, dass** die Rasteinrichtung (36) bei Ansetzen der Verschlussteile (2, 3) selbsttätig in die verrastete Stellung gelangt.

12. Verschlussvorrichtung (1) nach Anspruch 10 oder 11, **dadurch gekennzeichnet, dass** das zumindest eine Rastelement (385) in Richtung der verrasteten Stellung federvorgespannt ist.

13. Verschlussvorrichtung (1) nach einem der Ansprüche 10 bis 12, **dadurch gekennzeichnet, dass** die Rasteinrichtung (36) ein Eingriffselement (38) aufweist, das in der Schließstellung in das andere Verschlussteil (3, 2) eingreift und an dem das zumindest eine Rastelement (385) angeordnet ist.

14. Verschlussvorrichtung (1) nach Anspruch 13, **dadurch gekennzeichnet, dass** die Rasteinrichtung (36) an dem zweiten Verschlussteil (3) angeordnet ist und das Eingriffselement (38) axial entlang der Schließrichtung (X) zu dem Betätigungselement (34) verstellbar ist.

## Claims

1. A closure device (1) for releasably connecting two parts, comprising a first closure part (2) and a second closure part (3) which can be attached to each other along a closing direction (X), are held at each other in a closed position, and can be released from each other for opening the closure device (1) by separating the first closure part (2) and the second closure part (3),
wherein the second closure part (3) includes an actuating element (34) with a first engagement device (345) and a winding element (35) with a second engagement device (355), which is arranged on the actuating element (34) and can be rotated in a winding direction (V) for winding up a traction element (4), wherein in a release position the first engagement device (345) and the second engagement device (355) are not in engagement with each other so that the winding element (35) can be rotated relative to the actuating element (34), and can be brought into engagement with each other so that in an engagement position the winding element (35) can be rotated via the actuating element (34), wherein the first closure part (2) includes a first meshing device (25) and the second closure part (3) includes a second meshing device (351), and in the closed position of the closure device (1) the first meshing device (25) and the second meshing device (351) are in engagement with each other in such a way that the first closure part (2) and the second closure part (3) are positively held relative to each other along the winding direction (V),
wherein in the closed position the first closure part (2) and the second closure part (3) are mechanically latched with each other to hold the closure parts (2, 3) at each other against the closing direction (X),
wherein the first closure part (2) and the second closure part (3) each include at least one magnetic element (23, 33) for providing a force of magnetic attraction on attachment of the closure parts (2, 3) to each other.

2. The closure device (1) according to claim 1, **characterized in that** in the closed position of the closure device (1) the first engagement device (345) and the second engagement device (355) are in the engagement position.

3. The closure device (1) according to claim 1 or 2, **characterized in that** in the engagement position of the first engagement device (345) and the second engagement device (355), when the actuating element (34) is rotated in the winding direction (V), the winding element (35) is moved in the winding direction (V) together with the actuating element (34), but the actuating element (34) can be rotated relative to the winding element (35) against the winding direction (V).

4. The closure device (1) according to any of claims 1 to 3, **characterized in that** the first engagement device (345) and/or the second engagement device (355) have a sawtooth-shaped toothing extended around the closing direction (X).

5. The closure device (1) according to any of the preceding claims, **characterized in that** the actuating element (34) and the winding element (35) are adjustable with respect to each other for moving the engagement devices (345, 355) between the release position and the engagement position axially along the closing direction (X).

6. The closure device (1) according to any of the preceding claims, **characterized in that** the actuating element (34) and the winding element (35) are spring-biased with respect to each other in the direction of the release position.

7. The closure device (1) according to any of the preceding claims, **characterized in that** the second meshing device (351) is arranged on the actuating element (34) or on the winding element (35).

8. The closure device (1) according to any of the preceding claims, **characterized in that** in the closed position the second closure part (3) can be rotated relative to the first closure part (2) in the winding direction (V), but a rotation of the second closure part (3) relative to the first closure part (2) against the winding direction (V) is blocked.

9. The closure device (1) according to any of the preceding claims, **characterized in that** the first closure part (2) includes a cylinder portion (201) which in the closed position engages into an opening (350) of the winding element (35) to rotatably support the winding element (35) on the first closure part (2).

10. The closure device (1) according to any of the preceding claims, **characterized in that** one of the closure parts (2, 3) includes a latching device (36) with at least one movable latching element (385) which in a latched position engages into a latching receptacle (202) of the other closure part (3, 2) and thereby holds the closure parts (2, 3) at each other against the closing direction (X).

11. The closure device (1) according to claim 10, **characterized in that** on attachment of the closure parts (2, 3) the latching device (36) automatically gets into the latched position.

12. The closure device (1) according to claim 10 or 11, **characterized in that** the at least one latching element (385) is spring-biased in the direction of the latched position.

13. The closure device (1) according to any of claims 10 to 12, **characterized in that** the latching device (36) includes an engagement element (38) which in the closed position engages into the other closure part (3, 2) and on which the at least one latching element (385) is arranged.

14. The closure device (1) according to claim 13, **characterized in that** the latching device (36) is arranged on the second closure part (3) and the engagement element (38) is axially adjustable relative to the actuating element (34) along the closing direction (X).

## Revendications

1. Dispositif de fermeture (1) pour relier deux parties de manière amovible, comportant une première partie de fermeture (2) et une deuxième partie de fermeture (3), qui peuvent être appliquées l'une contre l'autre le long d'une direction de fermeture (X), sont maintenues l'une contre l'autre dans une position de fermeture et peuvent être détachées l'une de l'autre pour ouvrir le dispositif de fermeture (1) en séparant la première partie de fermeture (2) et la deuxième partie de fermeture (3),
dans lequel la deuxième partie de fermeture (3) présente un élément d'actionnement (34) avec un premier dispositif d'engagement (345) et un élément d'enroulement (35) avec un deuxième dispositif d'engagement (355), qui est agencé sur l'élément d'actionnement (34) et peut tourner dans une direction d'enroulement (V) pour enrouler un élément de traction (4), dans lequel le premier dispositif d'engagement (345) et le deuxième dispositif d'engagement (355) ne sont pas en prise l'un avec l'autre dans une position de libération, de sorte que l'élément d'enroulement (35) peut tourner par rapport à l'élément d'actionnement (34), et peuvent être mis en prise l'un avec l'autre de sorte que dans une position d'engagement l'élément d'enroulement (35) peut tourner par l'intermédiaire de l'élément d'actionnement (34), dans lequel la première partie de fermeture (2) présente un premier dispositif d'engrènement (25) et la deuxième partie de fermeture (3) présente un deuxième dispositif d'engrènement (351), et dans la position fermée du dispositif de fermeture (1) le premier dispositif d'engrènement (25) et le deuxième dispositif d'engrènement (351) sont en prise l'un avec l'autre de sorte que la première parte de fermeture (2) et la deuxième partie de fermeture (3) sont maintenues l'une par rapport à l'autre par engagement positif,
dans lequel dans la position fermée la première partie de fermeture (2) et la deuxième partie de fermeture (3) sont encliquetées mécaniquement l'une avec l'autre pour maintenir les parties de fermeture (2, 3) l'une à l'autre contre la direction de fermeture (X),
dans lequel la première partie de fermeture (2) et la deuxième partie de fermeture (3) présentent chacune au moins un élément magnétique (23, 33) pour fournir une force d'attraction magnétique lors de la mise en place des parties de fermeture (2, 3) l'une contre l'autre.

2. Dispositif de fermeture (1) selon la revendication 1, **caractérisé en ce que**, dans la position fermée du dispositif de fermeture (1), le premier dispositif d'engagement (345) et le deuxième dispositif d'engagement (355) sont dans la position engagée.

3. Dispositif de fermeture (1) selon la revendication 1 ou 2, **caractérisé en ce que** dans la position engagée du premier dispositif d'engagement (345) et du deuxième dispositif d'engagement (355), lorsque l'élément d'actionnement (34) est tourné dans la direction d'enroulement (V), l'élément d'enroulement (35) est déplacé avec l'élément d'actionnement (34) dans la direction d'enroulement (V), mais l'élément d'actionnement (34) peut tourner par rapport à l'élément d'enroulement (V) contre la direction d'enroulement (V).

4. Dispositif de fermeture (1) selon l'une quelconque des revendications 1 à 3, **caractérisé en ce que** le premier dispositif d'engagement (345) et/ou le deuxième dispositif d'engagement (355) possèdent une denture en dents de scie s'étendant autour de la direction de fermeture (X).

5. Dispositif de fermeture (1) selon l'une quelconque des revendications précédentes, **caractérisé en ce que**, pour déplacer les dispositifs d'engagement (345, 355) entre la position de libération et la position d'engagement, l'élément d'actionnement (34) et l'élément d'enroulement (35) sont réglables axialement l'un par rapport à l'autre le long de la direction de fermeture (X).

6. Dispositif de fermeture (1) selon l'une quelconque des revendications précédentes, **caractérisé en ce que** l'élément d'actionnement (34) et l'élément d'enroulement (35) sont sollicités par ressort l'un vers l'autre en direction de la position de libération.

7. Dispositif de fermeture (1) selon l'une quelconque des revendications précédentes, **caractérisé en ce que** le deuxième dispositif d'engrènement (351) est agencé sur l'élément d'actionnement (34) ou l'élément d'enroulement (35).

8. Dispositif de fermeture (1) selon l'une quelconque des revendications précédentes, **caractérisé en ce que** dans la position fermée la deuxième partie de fermeture (3) peut être tournée par rapport à la première partie de fermeture (2) dans la direction d'enroulement (V), mais une rotation de la deuxième partie de fermeture (3) par rapport à la première partie de fermeture (2) contre la direction d'enroulement (V) est bloquée.

9. Dispositif de fermeture (1) selon l'une quelconque des revendications précédentes, **caractérisé en ce que** la première partie de fermeture (2) présente un tronçon de cylindre (201) qui, dans la position fermée, est en prise avec une ouverture (350) de l'élément d'enroulement (35) pour supporter de manière rotative l'élément d'enroulement (35) sur la première partie de fermeture (2).

10. Dispositif de fermeture (1) selon l'une quelconque des revendications précédentes, **caractérisé en ce que** l'une des parties de fermeture (2, 3) présente un dispositif d'encliquetage (36) avec au moins un élément d'encliquetage mobile (385) qui, dans une position verrouillée, est en prise avec un logement d'encliquetage (202) de l'autre partie de fermeture (3, 2) et maintient ainsi les parties de fermeture (2, 3) l'une à l'autre contre la direction de fermeture (X).

11. Dispositif de fermeture (1) selon la revendication 10, **caractérisé en ce que** le dispositif d'encliquetage (36) se déplace automatiquement dans la position verrouillée lorsque les parties de fermeture (2, 3) sont attachées.

12. Dispositif de fermeture (1) selon la revendication 10 ou 11, **caractérisé en ce que** l'au moins un élément d'encliquetage (385) est précontraint par ressort en direction de la position verrouillée.

13. Dispositif de fermeture (1) selon l'une quelconque des revendications 10 à 12, **caractérisé en ce que** le dispositif d'encliquetage (36) présente un élément d'engagement (38) qui, dans la position fermée, est en prise avec l'autre partie de fermeture (3, 2) et sur lequel est agencé l'au moins un élément d'encliquetage (385).

14. Dispositif de fermeture (1) selon la revendication 13, **caractérisé en ce que** le dispositif d'encliquetage (36) est agencé sur la deuxième partie de fermeture (3) et l'élément d'engagement (38) est réglable axialement le long de la direction de fermeture (X) par rapport à l'élément d'actionnement (34).
